# EUROPEAN PATENT APPLICATION

(11) **EP 2 700 693 A1**
(43) Date of publication of application: **26.02.2014**
(21) Application number: 13005453.9
(22) Date of filing: 08.06.2011
(51) Int. Cl.: C09K 5/06, A23L 3/375, F25C 1/00, A23B 4/09, F25C 1/14, F25D 13/06

(54) **Ultra-small ice, uses thereof and apparatus for production**

(30) Priority: 08.06.2010 US 352736 P
(62) Divisional of application: 11727077.7
(71) Applicant: Nanoice, Inc., Bothell, Washington 98011 (US)
(72) Inventor: Gudnason, Snaebjorn Tr., 112 Reykjavik (IS)
(74) Representative: Grünecker, Kinkeldey, Stockmair & Schwanhäusser

(57) **Abstract**

An apparatus and a method for production of the compositions of matter are provided. In an embodiment, the apparatus is used to prepare gel-ice having a variety of uses, including for food processing and preservation, and the apparatus can be used to concentrate or purify a liquid, or extract from the liquid.

## Description

### CROSS REFERENCE TO RELATED APPLICATION

This application claims the benefit under 35 U.S.C. § 119(e) of U.S. Provisional Patent Application No. 61/352,736 filed June 08, 2010, which application is incorporated herein by reference in its entirety.

### BACKGROUND

### Technical Field

The present invention relates generally to compositions of matter as a cold source, uses thereof and an apparatus for uses including production of the compositions of matter, and more specifically to a particular ice with unique properties.

### Description of the Related Art

Storage, processing or displaying requires a cold source for a variety of items including, for example, foods, beverages, flowers and organs. There are a number of problems related to the presently available cold sources for many industries. For example, in the fisheries lines of business which include fishing via vessels or aquaculture, it is desirable to obtain rapid chilling of fish and to maintain temperature control from catch to consumption. Rapid chilling of fish and subsequent temperature control can prevent injuries, trauma and degradation. Such prevention would result in a larger catch, or crop, of better quality fish with a longer shelf life. The currently available cold sources in the fisheries lines of business for the chilling of fish and subsequent temperature control are insufficient to meet the needs of the harvesters, sellers and consumers.

Accordingly, there is a need in the art for an improved cold source for the chilling of fish and subsequent temperature control. The present invention fulfills this need and further provides other advantages.

### BRIEF SUMMARY

Briefly stated, compositions of matter, uses thereof and an apparatus for uses including production of the compositions of matter are provided. The compositions of matter are a cold source and, more specifically, are particular forms of ice with unexpectedly unique properties.

The present invention provides the following items 1-34:
1. An isolated gel-ice for use on or off land, comprising ice-fraction components and at least one freezing level reducing component, wherein the freezing level reducing component is in between the ice-fraction components;
   wherein the ice-fraction components are composed of water and have a diameter in the range of 0.1 to 2.5 microns;
   wherein the freezing level reducing component has a concentration in the range of 0.1 % to 26% (% w/v where the freezing level reducing component is a solid and % v/v where the freezing level reducing component is a liquid); and
   wherein the gel-ice contains the ice-fraction components in the range of 1% to 60% (% w/v).
2. The isolated gel-ice according to item 1 wherein the gel-ice comprises ice-fraction components as defined in item 1, and the at least one freezing level reducing agent comprises a salt water component.
3. The isolated gel-ice according to item 2 wherein the gel-ice consists of ice-fraction components and a salt water component.
4. The isolated gel-ice according to item 2, wherein the salt water component has a salinity in the range of 0.1 % to 26% (% w/v).
5. The isolated gel-ice according to item 1 wherein the at least one freezing level reducing component is a sugar.
6. The isolated gel-ice according to item 5 wherein the at least one freezing level reducing component is a natural sugar.
7. The isolated gel-ice of item 6 wherein the natural sugar is found in a fruit, vegetable, dairy product or floral product.
8. The isolated gel-ice of item 6 wherein the natural sugar is glucose.
9. The isolated gel-ice according to item 1 wherein the gel-ice comprises ice-fraction components as defined in item 1 and the at least one freezing level reducing agent is an alcohol component.
10. The isolated gel-ice according to item 9 wherein the gel-ice consists of ice-fraction components and an alcohol component..
11. The isolated gel-ice according to item 1, wherein the at least one freezing level reducing component is an antibacterial.
12. The isolated gel-ice according to item 11, wherein the antibacterial comprise chlorine dioxide.
13. The isolated gel-ice according to item 11, wherein the antibacterial comprise chlorine dioxide and sodium hydroxide.
14. The isolated gel-ice according to item 1, wherein the at least one freezing level reducing agent is a GRAS substance.
15. A method of cooling a substance comprising contacting the substance with a gel-ice according to any one of items 1-14, thereby cooling the substance.
16. A gel-ice generator apparatus, comprising:
   an inner tube having an inner surface defining at least a portion of a gel-ice formation chamber;
   an outer tube surrounding the inner tube to define a coolant chamber between the outer tube and the inner tube; and
   a mixing apparatus for mixing flowable material in the gel-ice formation chamber, the mixing apparatus including
   a hollow rotor shaft positioned in the gel-ice formation chamber and including a main body and a plurality of openings, the main body having a bore extending longitudinally along the hollow rotor shaft, the plurality of openings extending through the main body for fluid communication between the bore and a gap between the main body and the inner surface of the inner tube, and
   a plurality of deployable elements carried by the hollow rotor shaft, the deployable elements being positioned in the gap and moveable with respect to the inner tube.
17. The gel-ice generator apparatus of item 16, wherein each of the elements has a leading portion configured to cause flowable material in the gap to flow through at least one of the openings and into the bore as the hollow rotor shaft rotates.
18. The gel-ice generator apparatus of item 16, wherein the elements are freely movable away from and towards the inner surface of the inner tube to promote forming of ice-fractions with diameters less than about 2.5 microns.
19. The gel-ice generator apparatus of item 16, further comprising:
   a connector extending from the main body of the hollow rotor shaft and through a hole in one of the elements.
20. The gel-ice generator apparatus of item 19, wherein the one element slidably contacts a shaft of the connector.
21. The gel-ice generator apparatus of item 16, further comprising:
   a plurality of projections extending from the main body into the bore.
22. The gel-ice generator apparatus of item 21, wherein the plurality of projections are arranged and dimensioned to generate at least one of a turbulent flow within the bore and a vortex within the bore.
23. The gel-ice generator apparatus of item 21, wherein a ratio of a height of at least one of the projections to a diameter of the bore is in a range of about 0.1 to about 0.2.
24. The gel-ice generator apparatus of item 16, wherein the plurality of openings define sets of the openings that are circumferentially spaced apart from one another, at least one of the sets includes openings that are spaced apart from one another with respect to a longitudinal axis of the main body.
25. A gel-ice manufacturing system, comprising:
   a fluid supply;
   a gel-ice generator apparatus coupled to the fluid supply, the gel-ice generator apparatus receives fluid from the fluid supply, the gel-ice generator apparatus including a drive motor,
   a container having a gel-ice formation chamber through which fluid from the fluid supply flows,
   a cooling jacket surrounding the container and through which a coolant is capable of flowing to cool contents in the gel-ice formation chamber,
   a mixing apparatus coupled to the drive motor, the mixing apparatus including
   a rotor shaft in the gel-ice formation chamber,
   a plurality of elements carried by the rotor shaft, the elements being movable towards an inner surface of the container in response to rotation of the rotor shaft; and
   a controller communicatively coupled to the drive motor of the gel-ice generator apparatus, the controller being configured to command the drive motor to rotate the rotor shaft at a rotational speed equal to or greater than about 1,500 rotations per minute as the fluid flows through the gel-ice formation chamber.
26. The gel-ice manufacturing system of item 25, further comprising:
   a cooling system in communication with the controller, the cooling system is configured to deliver a coolant to the cooling jacket to keep at least a portion of the container that contacts the fluid at a temperature in a range of about -20°C to about 0°C in response to signals from the controller.
27. The gel-ice manufacturing system of item 25, further comprising:
   a cooling system in communication with the controller, the cooling system delivers a coolant to the gel-ice generator apparatus to keep an interior surface of the container at a temperature in a range of about -20°C to about -10°C in response to signals from the controller.
28. A method of manufacturing gel-ice, comprising:
   delivering a flowable material to a gel-ice formation chamber;
   rotating a mixing apparatus to mix the flowable material in the gel-ice formation chamber and to pass the flowable material through openings in a sidewall of a rotor shaft of the mixing apparatus and into a bore of the rotor shaft;
   mixing the flowable material within the bore using projections carried by the rotor shaft, the projections being positioned in the bore; and
   delivering gel-ice out of the gel-ice formation chamber, the gel-ice comprising a mixture of flowable material that passed through at least a portion of the bore and flowable material the flowed along an outer surface of the rotor shaft.
29. The method of manufacturing of item 28, further comprising:
   maintaining a temperature of a surface defining at least a portion of the gel-ice formation chamber at a temperature equal to or less than about -10°C while the mixing apparatus mixes the flowable material.
30. The method of manufacturing of item 28, wherein delivering the flowable material includes delivering salt water or sugared water to the gel-ice formation chamber.
31. The method of manufacturing of item 28, wherein rotating the mixing apparatus includes rotating the rotor shaft carrying radially deployable mixing elements at a rotational speed equal to or greater than about 1,500 rotations per minute.
32. The method of manufacturing of item 28, wherein rotating the mixing apparatus includes rotating the rotor shaft at a rotational speed equal to or greater than about 2,500 rotations per minute.
33. The method of manufacturing of item 28, further comprising:
   flowing at least some of the flowable material along a section of the gel-ice formation chamber between the mixing apparatus and a container to form ice-fractions along an inner surface of the container, the container including the gel-ice formation chamber; and
   flowing at least some of the flowable material with the ice-fractions along the bore of the rotor shaft.
34. The method of manufacturing of item 33, further comprising:
   agitating at least a portion of the flowable material in the bore using the projections.

In an embodiment, the present invention provides an isolated gel-ice for use on or off land, comprising ice-fraction components and at least one freezing level reducing component, wherein the at least one freezing level reducing component is in between the ice-fraction components; wherein the ice-fraction components are composed of water and have a diameter in the range of 0.1 to 2.5 microns; wherein the freezing level reducing component has a concentration in the range of 0.1% to 26% (% w/v where the freezing level reducing component is a solid and % v/v where the freezing level reducing component is a liquid); and wherein the gel-ice contains the ice-fraction components in the range of 1% to 60% (% w/v). In some embodiments, the ice fraction components have a diameter in the range of 0.2 to 0.8 microns.

In an embodiment, the present invention provides an isolated gel-ice for use on or off land, comprising ice-fraction components, and a salt water component, an alcohol component, a freezing level reducing component or combinations thereof, wherein the component is in between the ice-fraction components; wherein the ice-fraction components are composed of water and have a diameter in the range of 0.1 to 2.5 microns; wherein the salt water component has a salinity in the range of 0.1% to 26% (% w/v) or the alcohol component or the freezing level reducing component has a concentration in the range of 0.1% to 25% (% w/v where component is a solid and % v/v where component is a liquid); and wherein the gel-ice contains the ice-fraction components in the range of 1% to 60% (% w/v). In an embodiment, the isolated gel-ice comprises ice-fraction components and the at least one freezing level reducing agent comprises a salt water component. In an embodiment, the isolated gel-ice consists of ice-fraction components and a salt water component. In an embodiment, the isolated gel-ice comprises ice-fraction components and at least one freezing level reducing component. In an embodiment, the isolated gel-ice consists of ice-fraction components and at least one freezing level reducing component. In an embodiment, the isolated gel-ice comprises ice-fraction components and an alcohol component. In an embodiment, the isolated gel-ice consists of ice-fraction components and an alcohol component. In some embodiments, the at least one freezing level reducing component is a natural freezing level reducing component.

In an embodiment of the isolated gel-ice, the at least one freezing level reducing component is a sugar, for example a natural sugar. In an embodiment, the natural sugar is found in a fruit, vegetable, dairy product or floral product. In an embodiment, the natural sugar is glucose.

The compositions of matter of the present invention have a variety of uses. In an embodiment, an isolated gel-ice provided herein is used in a method for cooling a substance. In an embodiment, the method comprises contacting a substance with an isolated gel-ice of the present invention, thereby effecting cooling of the substance.

The apparatus of the present invention is used to prepare gel-ice, and can be used to concentrate or purify a liquid, or extract from a liquid.

In an embodiment, the present invention provides a gel-ice generator apparatus, comprising: an inner tube having an inner surface defining at least a portion of a gel-ice formation chamber; an outer tube surrounding the inner tube to define a coolant chamber between the outer tube and the inner tube; and a mixing apparatus for mixing flowable material in the gel-ice formation chamber, the mixing apparatus including a hollow rotor shaft positioned in the gel-ice formation chamber and including a main body and a plurality of openings, the main body having a bore extending longitudinally along the hollow rotor shaft, the plurality of openings extending through the main body for fluid communication between the bore and a gap between the main body and the inner surface of the inner tube, and a plurality of deployable elements carried by the hollow rotor shaft, the deployable elements being positioned in the gap and moveable with respect to the inner tube.

In an embodiment, the present invention provides a gel-ice manufacturing system, comprising: a fluid supply; a gel-ice generator apparatus coupled to the fluid supply, the gel-ice generator apparatus receives fluid from the fluid supply, the gel-ice generator apparatus includes a drive motor, a container having a gel-ice formation chamber through which fluid from the fluid supply flows, a cooling jacket surrounding the container and through which a coolant flows to cool contents in the gel-ice formation chamber, a mixing apparatus coupled to the drive motor, the mixing apparatus including a rotor shaft in the gel-ice formation chamber, a plurality of elements carried by the rotor shaft, the elements being movable towards an inner surface of the container in response to rotation of the rotor shaft; and a controller communicatively coupled to the drive motor of the gel-ice generator apparatus, the controller being configured to command the drive motor to rotate the rotor shaft at a rotational speed equal to or greater than about 1,500 rotations per minute as the fluid flows through the gel-ice formation chamber.

In an embodiment, the present invention provides a method of manufacturing gel-ice, comprising: delivering a flowable material to a gel-ice formation chamber; rotating a mixing apparatus to mix the flowable material in the gel-ice formation chamber and to pass the flowable material through openings in a sidewall of a rotor shaft of the mixing apparatus and into a bore of the rotor shaft; mixing the flowable material within the bore using projections carried by the rotor shaft, the projections being positioned in the bore; and delivering gel-ice out of the gel-ice formation chamber, the gel-ice comprising a mixture of flowable material that passed through at least a portion of the bore and flowable material the flowed along an outer surface of the rotor shaft.

These and other aspects of the present invention will become apparent upon reference to the following detailed description and attached drawings. All references disclosed herein are hereby incorporated by reference in their entirety as if each was incorporated individually.

### BRIEF DESCRIPTION OF THE SEVERAL VIEWS OF THE DRAWINGS

Non-limiting embodiments are discussed with reference to the following drawings. The same reference numerals refer to like features, parts, or acts throughout the various views, unless specified otherwise.
Figure 1 is a side elevational view of a processing system, in accordance with one embodiment.
Figure 2 is an isometric view of a gel-ice generator apparatus, in accordance with one embodiment.
Figure 3 is a side elevational view of the gel-ice generator apparatus of Figure 2.
Figure 4 is a top view of the gel-ice generator apparatus of Figure 2.
Figure 5 is an exploded isometric view of a gel-ice generator apparatus, in accordance with one embodiment.
Figure 6 is an isometric view of a rotor shaft assembly.
Figure 7 is a top view of the rotor shaft assembly of Figure 6.
Figure 8 is a front elevational view of the rotor shaft assembly of Figure 6.
Figure 9 is a detailed view of a portion of the rotor shaft assembly of Figure 8.
Figure 10 is a cross-sectional view of a portion of the gel-ice generator apparatus of Figure 4 taken along a line 10-10.
Figure 11 is a cross-sectional view of the gel-ice generator apparatus of Figure 4 taken along a line 11-11.
Figure 12 is a detailed view of a portion of the gel-ice generator apparatus of Figure 11.
Figure 13 is a detailed view of another portion of the gel-ice generator apparatus of Figure 11.
Figure 14 is a detailed view of yet another portion of the gel-ice generator apparatus of Figure 11.

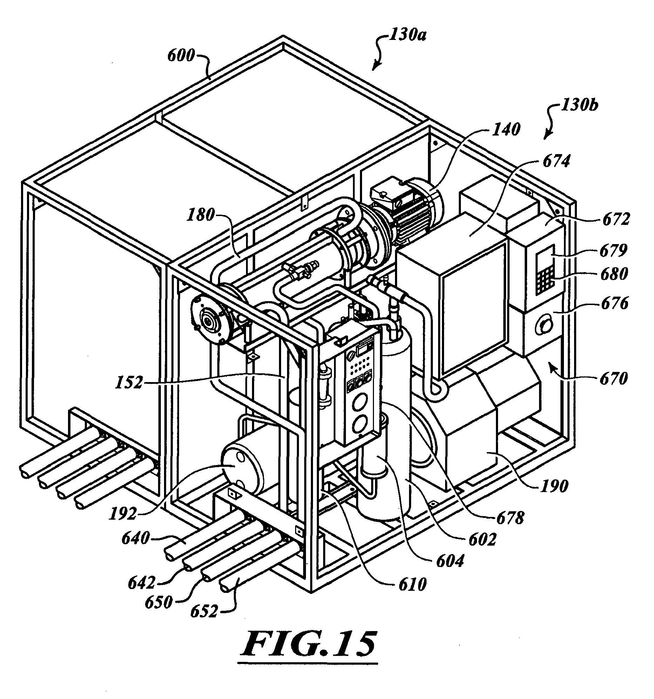

Figure 15 is an isometric view of a pair of modular gel-ice manufacturing systems.
Figure 16 shows (from left to right) examples of thick (35% ice-fraction components), medium thick (25% ice-fraction components) and thin (15% ice-fraction components) gel-ice as produced by a gel-ice generator apparatus of the present invention.
Figure 17 is a picture of two fresh cod after 14 days on different ice. As noted, one cod was kept in conventional flake ice and the other cod was kept in gel-ice of the present invention. The cod kept in conventional flake ice shows signs of degradation (e.g., reduction in the number of discrete spots visible), whereas the cod kept in gel-ice does not.
Figure 18 depicts graphs comparing estimates of the onboard storage and retail shelf life of fresh cod stored in conventional flake ice versus gel-ice of the present invention. As shown, cod stored in gel-ice can increase the retail shelf life even after longer onboard storage (in gel-ice).
Figure 19 depicts a graph comparing estimates of the yield from catch to retail sale of fresh fish kept in conventional flake ice versus gel-ice of the present invention. As shown, fresh fish stored in gel-ice can increase the yield.
Figure 20 is a scanning transmission electron microscope (S/TEM) picture of gel-ice of the present invention by FEI Tecnai TEM (using a Tecnai G2 F20).

The ice-fraction components of the gel-ice possessed an average diameter of 0.5 to 0.8 microns.

### DETAILED DESCRIPTION

As noted above, the present invention provides compositions of matter, uses thereof and an apparatus for production of the compositions of matter. The compositions of matter and the apparatus have a variety of uses. The compositions of matter may be used, for example, in the areas of fisheries, refrigeration, horticulture, medical, industrial, and food and beverage, including food and beverages for human consumption. The apparatus may be used, for example, in the areas of horticulture, thermal energy storage, water purification, and food and beverage.

The present invention provides, in one aspect, isolated particular forms of ice with unexpectedly unique properties. In an embodiment, an isolated gel-ice is provided comprising ice-fraction components and at least one freezing level reducing component, wherein the component is in between the ice-fraction components; wherein the ice-fraction components are composed of water and have a diameter in the range of 0.1 to 2.5 microns; wherein the freezing level reducing component has a concentration in the range of 0.1% to 26% (% w/v where the freezing level reducing component is a solid and % v/v where the freezing level reducing component is a liquid); and wherein the gel-ice contains the ice-fraction components in the range of 1% to 60% (% w/v). In an embodiment, an isolated gel-ice is provided comprising ice-fraction components, and a salt water component, an alcohol component, a freezing level reducing component or combinations thereof, wherein the component is in between the ice-fraction components; wherein the ice-fraction components are composed of water and have a diameter in the range of 0.1 to 2.5 microns; wherein the salt water component has a salinity in the range of 0.1% to 26% (% w/v) or the alcohol component or the freezing level reducing component has a concentration in the range of 0.1% to 25% (% w/v where component is a solid and % v/v where component is a liquid); and wherein the gel-ice contains the ice-fraction components in the range of 1% to 60% (% w/v).

The concentration of the freezing level reducing agent can vary in different embodiments. For example a gel-ice comprising a salt as a freezing level reducing agent may have a different concentration of freezing level reducing agent than when an alcohol or sugar is used as the freezing level reducing agent. In certain other embodiments, the at least one freezing level reducing agent has a concentration in the range of 0.1 % to 95%, 0.1% to 75%, 0.1% to 50%, 0.1% to 25%, 0.1% to 10% or 0.1% to 5%. In certain embodiments, the freezing level reducing agent has a concentration of 0.1% to 26%. For example, the freezing level reducing agent may be a salt solution (e.g., brine).

A freezing level reducing component is any component that reduces the freezing point of water. For example, a solute such as salt, sugar, or any other soluble substance that alters the colligative properties (e.g., freezing point) of a pure solvent. While not wishing to be bound by theory, it is believed that when solutes are dissolved in pure water, the hydrogen bonding network of the water molecules is disrupted which leads to reduction in the temperature at which the water freezes. Examples of freezing level reducing agents generally include any substance soluble in water. Certain non-limiting examples of freezing level reducing agents include: salts, sugars, alcohols and any substance listed by the FDA as generally regarded as safe (GRAS, see e.g. Table 1). In some embodiments, the freezing level reducing agent is a GRAS substance listed in Table 1 and has a freezing point below - 1 °C. Freezing level reducing agents which do not corrode 316L stainless steel may find particular utility in the described apparatus for making gel ice.

This isolated gel-ice comprises, or consists of, ice-fraction components and one or more components in between the ice-fraction components. As used herein, "in between the ice fraction components" refers to the freezing level reducing agent being present within the ice crystals, in between the individual ice crystals (e.g., adhering to the outer urfaces of the ice crystals) or combinations thereof. The ice-fraction components are composed of water. The ice-fraction components are smaller in size than normal ice crystals. The ice-fraction components have a diameter in the range generally of 0.1 to 2.5 microns. Typically the diameters are less than 1.0 micron (0.1 to less than 1.0 micron), with 0.5 to 0.8 microns as an average. In some embodiments, the ice fraction components have a diameter in the range of 0.2 to 0.8 microns. Diameters of ice-fraction components are measured using a scanning transmission electron microscope. The ice-fraction components in the gel-ice are generally in the range of 1% to 60% (% w/v), and typically 5% to 50% (% w/v). For example, 100 liters of gel-ice with 25% ice-fraction components contains 25 kg of ice. Unless specified otherwise, all "v" herein are the volume of the gel-ice *(i.e.,* the total volume). In embodiments, the gel-ice may be referred to as "thick," "medium thick" or "thin." Thick gel-ice generally contains about 35-45% (% w/v) ice-fraction components. Medium thick gel-ice generally contains about 25-30% (% w/v) ice-fraction components. Thin gel-ice generally contains about 10-20% (% w/v) ice-fraction components. The percent of ice-fraction components in the gel-ice may be controlled by the rate at which the water solution is introduced into the apparatus for producing the gel-ice. For example, introducing seawater under pressure into a gel-ice generator apparatus at a rate of 250 liters per hour produces thick gel-ice, whereas, when seawater under pressure is delivered into the gel-ice generator apparatus at a rate of 600 liters per hour, thin gel-ice is produced.

One or more components are in between the ice fraction components. In an embodiment, a salt water component is in between the ice-fraction components. The salt water component has a salinity in the range generally of 0.1% to 26% (% w/v), and typically 1% to 26% (% w/v). In an embodiment, the salinity is 2.5% to 3.2% (% w/v). The salt water component may be seawater or fresh water to which salt (e.g., sea-salt) is added, or a mixture of both. The fresh water may be potable or non-potable water.

In an embodiment, the at least one freezing level reducing component is in between the ice-fraction components. A freezing level reducing component is any substance that reduces the freezing point of water. Such a component is present in the gel-ice in a concentration in the range generally of 0.1% to 25%, and typically 0.5% to 20%. Where the component is a solid at room temperature, the % concentration is % w/v. Where the component is a liquid at room temperature, the % concentration is % v/v. As used herein, room temperature refers to 20°C. A component may be extracted or otherwise purified from a natural source or prepared synthetically, using biological or chemical techniques, or combinations thereof. Such a component may be a sugar. As used herein, a sugar is a molecule having more than one hydroxyl moiety, for example a polyol. The sugar may be a natural sugar (i.e., a sugar occurring naturally in nature). The sugar may be found, for example, in a fruit, vegetable, dairy product or floral product. For example, in some embodiments, the gel-ice comprises a fruit juice, for example apple, pear, orange, pineapple, mango or cranberry juice, and the gel-ice may be in a form for human consumption, for example a frozen drink.

Sugar cane is another example of a natural source of a freezing level reducing component. An example of the sugar is glucose, fructose, or sucrose. In certain embodiments, the freezing level reducing agent is a sugar substitute, for example saccharin, aspartame or other sugar substitute.

In other embodiments, the at least one freezing level reducing component is an antibacterial substance. As used herein, an "antibacterial substance" is any substance that inhibits, retards, stops or prevents the growth of microorganisms or kills microorganisms. For example, in some embodiments, the at least one freezing level reducing component is chlorine dioxide, chlorite salts or combinations thereof. In other embodiments, the at least one freezing level reducing agent comprises a mixture of chlorite salts (e.g., sodium chlorite) and hydroxide salts (e.g., sodium hydroxide). One such example is a freezing level reducing component known as Hydromax® (available from Food Sciences Limited). In other embodiments, the at least one freezing level reducing component is a non-chlorite antibacterial, for example peracetic acid or other substance generally regarded as safe (GRAS) for use in food by the U.S. Food and Drug Administration (see below). Gel-ice comprising an antibacterial freezing level reducing component finds utility in any number of applications. For example, such gel ice may used in the food packaging to prevent spoilage of food products.

Other chemicals used in foods may also be used in the gel-ice. For example, in some embodiments the freezing level reducing component is any substance generally regarded as safe (GRAS) for use in food by the U.S. Food and Drug Administration or any other regulatory agency. One skilled in the art will recognize such substances. An exemplary list of GRAS substances is provided in Table 1 below:

**Table 1. GRAS Substances**

| | | |
|---|---|---|
| Acetic acid | Benzoic Acid | Carboxymethyl |
| Acetylated Distarch | Biotin | cellulose |
| Adipate | Bleached Starch | Carnauba wax |
| Acetylated Distarch | Brown algae | Carob Bean Gum |
| Glycerol Acetylated Distarch | Butylated Hydroxyanisole | Carotene (beta-carotene) |
| Phosphate | (BHA) | Carrageenan |
| Acetylated Distarchoxy | Butylated | Casein |
| Propanol | Hydroxytoluene | Cellulose acetate |
| Acid hydrolyzed | (BHT) | Cholic acid |
| proteins | Caffeine | Choline Bitartrate |
| Acid Modified Starch | Calcium acetate | Choline Chloride |
| Aconitic Acid | Calcium alginate | Citric acid |
| Adipic acid | Calcium carbonate | Clay (kaolin) |
| Agar-agar | Calcium caseinate | Clove Bud Extract |
| Aluminum ammonium | Calcium chloride | Clove Bud Oil |
| sulfate | Calcium citrate | Clove Bud Oleoresin |
| Aluminum calcium | Calcium gluconate | Clove Leaf Oil |
| silicate | Calcium | Clove Stem Oil |
| Aluminum hydroxide | glycerophosphate | Coconut oil |
| Aluminum oleate | Calcium | Copper (cupric) |
| Aluminum palmitate | hexametaphosphate | gluconate |
| Aluminum potassium | Calcium hydroxide | Copper (cupric) sulfate |
| sulfate | Calcium hypophosphite | Corn dextrins |
| Aluminum sodium | Calcium iodate | Corn silk |
| sulfate | Calcium L-ascorbate | Corn Sugar (Dextrose) |
| Aluminum sulfate | Calcium Lactate | Corn Syrup |
| Ammoniated | L(+)-calcium lactate | Cornstarch |
| Glycyrrhizin | Calcium oxide | Cuprous iodide |
| Ammonium alginate | D- or DL calcium | Desoxycholic acid |
| Ammonium bicarbonate | pantothenate | Dextran |
| Ammonium carbonate | Calcium phosphate | Dextrins |
| Ammonium chloride | dibasic | Diacetyl |
| Ammonium citrate | Calcium phosphate | Diatomaceous earth |
| Ammonium hydroxide | monobasic | (filter aid) |
| Ammonium phosphate dibasic | Calcium phosphate tribasic | Dibasic magnesium phosphate |
| Ammonium phosphate | Calcium phytate | Dietary Iron |
| dibasic | Calcium propionate | Dilauryl |
| Ammonium phosphate | Calcium pyrophosphate | thiodipropionate |
| monobasic | Calcium silicate | Distarch Glycerol |
| Ammonium sulfate | Calcium sorbate | Distarch Propanol |
| Arrowroot Starch | Calcium stearate | Distarch Oxypropanol |
| L-ascorbic acid | Caprylic Acid | Electrolytic Iron |
| Ascorbyl palmitate | Caramel | Electrolytic iron |
| (palmitoyl L-ascorbic) | Carbon dioxide | Enzymatically |
| Beeswax (yellow or | Carbonyl Iron | hydrolyzed casein |
| white) | Carbonyl Iron | Enzymatically |
| Bentonite | | hydrolyzed protein |
| Erythorbic acid (Disoascorbic acid) | Hydroxypropyl | Magnesium stearate |
| | Distarch Phosphate | Magnesium sulfate |
| Ethyl cellulose | Hydroxypropyl Starch | Malic acid |
| Ethyl formate | Hydroxypropyl Starch, | L-malic acid |
| Ferric ammonium | oxidized | Manganese |
| citrate | Hydroxypropylmethyl | glycerophosphate |
| Ferric chloride | cellulose | Manganese |
| Ferric citrate | Indian Dill Seed | glycerophosphate |
| Ferric oxide | Inositol | Manganous chloride |
| Ferric oxide | Invert Sugar | Manganous citrate |
| Ferric phosphate | Iron - Report on | Manganous gluconate |
| Ferric pyrophosphate | Bioavailability and | Manganous |
| Ferric sodium | Utilization of Iron | hypophosphite |
| pyrophosphate | Iron - Report on | Manganous oxide |
| Ferric sulfate | Clinical Research | Manganous sulfate |
| Ferrous ascorbate | Protocols to Elucidate | Mannitol |
| Ferrous carbonate | The Possible Hazards | Methyl Paraben |
| Ferrous citrate | of Increased Iron | Methylcellulose |
| Ferrous fumarate | Enrichment of Cereal | Milo Starch |
| Ferrous gluconate | Products | Monoammonium |
| Ferrous lactate | Iron caprylate | Lglutamate |
| Ferrous sulfate | Iron linoleate | Monomeric ethyl |
| Ferrous sulfate | Iron naphthenate | acrylate |
| Fish oil, hydrogenated | Iron oxides | Monomeric methyl |
| Formic acid | Iron peptonate | acrylate |
| Garlic and Oil of Garlic | Iron | Monopotassium |
| Gelatin | polyvinylpyrrolidone | Lglutamate |
| L-Glutamic acid | Iron tallate | Monosodium |
| L-Glutamic acid | Iron, elemental | Lglutamate |
| hydrochloride | Isopropyl citrate | Monostarch Phosphate |
| Glycerin and Glycerides | Japan wax | Mustard and Oil of |
| Glycocholic acid | Lactic acid | Mustard (Brown and |
| Glycyrrhiza | D(-)-lactic acid | Yellow) |
| Guar Gum | L(+)-lactic acid | Niacin (nicotinic acid) |
| Gum Arabic | Lard | Niacinamide |
| Gum Ghatti | Lard oil | (nicotinamide) |
| Gum guaiac | Lecithin | Nickel (elemental) |
| Gum Tragacanth | Lecithin, hydrogen | Nutmeg and Mace |
| Helium gas | peroxide bleached | Oil of Rue |
| High Amylose | Licorice, Glycyrrhiza, | Oleic acid |
| Cornstarch | and Ammoniated | Ox bile extract |
| Hydrochloric acid | Glycyrrhizin | D-Pantothenyl alcohol |
| Hydrogen peroxide | Linoleic acid | Papain |
| Hydrogenated | Magnesium carbonate | Peanut oil |
| soybean oil | Magnesium chloride | Pectin, amidated |
| Hydrogenated tallow | Magnesium gluconate | Pectin, high ester |
| Hydroxypropyl | Magnesium hydroxide | Pectin, low acid |
| Distarch Glycerol | Magnesium oxide | Pectinates |
| | Magnesium silicate | Pectinic acid |
| Perlite (filter aid) | Reduced Iron | Sodium oleate |
| Phosphoric acid | Reduced Iron | Sodium palmitate |
| Polymeric ethyl acrylate | Rennet | DL |
| Polymeric methyl | Riboflavin | Sodiumpantothenate |
| acrylate | Riboflavin-5'-phosphate | L-Sodium-pantothenate |
| L(+) potassium acid | Rice Starch | Sodium phosphate |
| tartrate | Silica aerogel | dibasic |
| Potassium alginate | Silicon dioxides | Sodium phosphate |
| Potassium bicarbonate | Sodium acetate | monobasic |
| Potassium chloride | Sodium acid | Sodium phosphate |
| Potassium citrate | pyrophosphate | tribasic |
| Potassium gluconate | Sodium alginate | Sodium |
| Potassium | Sodium aluminate | phosphoaluminate |
| glycerophosphate | Sodium aluminosilicate | Sodium propionate |
| Potassium hydroxide | Sodium aluminum | Sodium pyrophosphate |
| Potassium | phosphate, acidic | Sodium sesquicarbonate |
| hypophosphite | Sodium aluminum | Sodium silicate |
| Potassium iodate | phosphate, basic | Sodium sorbate |
| Potassium iodide | Sodium Benzoate | Sodium sulfite |
| Potassium metabisulfite | Sodium bicarbonate | L(+) sodium tartrate |
| Potassium phosphate | Sodium bisulfite | Sodium |
| dibasic | Sodium calcium | tetrametaphosphate |
| Potassium phosphate | aluminosilicate | Sodium tetraphosphate |
| monobasic | Sodium carbonate | Sodium thiosulfate |
| Potassium phosphate | Sodium carboxymethyl | Sodium |
| tribasic | cellulose | trimetaphosphate |
| Potassium | Sodium caseinate | Sodium |
| polymetaphosphate | Sodium Chloride | tripolyphosphate |
| Potassium | Sodium citrate | Sorbic acid |
| pyrophosphate | Sodium diacetate | Sorbitol |
| Potassium silicate | Sodium erythorbate | Sorbose |
| Potassium sorbate | (sodium | Soy protein isolate |
| Potassium | Disoascorbate) | Soy sauces |
| tripolyphosphate | Sodium ferric EDTA | Stannous Chloride |
| Potato starch | Sodium | Starch Acetate |
| Pregelatinized starch | ferricitropyrophosphat | Starch Aluminum |
| Propionic acid | e | Octenyl Succinate |
| Propyl Gallate | Sodium formate | Starch Sodium |
| Propyl Paraben | Sodium gluconate | Hypochlorite oxidized |
| Propylene Glycol | Sodium | Starch Sodium |
| Propylene glycol | hexametaphosphate | Succinate |
| alginate | Sodium hydrosulfite | Starch, Sodium Octenyl |
| Propylene glycol | Sodium hydroxide | Starter distillate |
| monostearate | Sodium Hydroxide | Stearic acid |
| Pulps | Gelatinized Starch | Stearyl citrate |
| Pyridoxine | Sodium hypophosphite | Sterculia Gum (karaya |
| Pyridoxine | Sodium L-ascorbate | gum) |
| hydrochloride | Sodium metabisulfite | Succinic acid |
| Red algae | Sodium metaphosphate | |
| Succinyl Distarch Glycerol | | |
| | | |
| Sucrose | | |
| Sulfamic acid | | |
| Sulfur dioxide | | |
| Sulfuric Acid | | |
| Talc (basic magnesium silicate) | | |
| | | |
| Tall oil | | |
| Tallow | | |
| Tannic acid | | |
| (hydrolyzable | | |
| gallotannins) | | |
| Tapioca Starch | | |
| L(+) tartaric acid | | |
| Taurocholic acid | | |
| Thiamine hydrochloride | | |
| Thiamine mononitrate | | |
| Thiodipropionic acid | | |
| alpha-Tocopherol | | |
| acetate | | |
| alpha-Tocopherols | | |
| Tribasic magnesium | | |
| phosphate | | |
| Tricalcium silicate | | |
| Triethyl citrate | | |
| Urea | | |
| Vitamin A | | |
| Vitamin A acetate | | |
| Vitamin A palmitate | | |
| Vitamin B 12 | | |
| (cyanocobalamin) | | |
| Vitamin D2 | | |
| (ergocalciferol) | | |
| Vitamin D3 | | |
| (cholecalciferol) | | |
| Waxy Maize Starch | | |
| Wheat Starch | | |
| Yeast autolyzates | | |
| Zinc acetate | | |
| Zinc carbonate | | |
| Zinc chloride | | |
| Zinc gluconate | | |
| Zinc hydrosulfite | | |
| Zinc oxide | | |
| Zinc sulfate | | |

In an embodiment, an alcohol is a freezing level reducing component in between the ice-fraction components. As used herein, an alcohol is an organic compound comprising an OH (hydroxyl moiety). For example, an alcohol may be represented by ROH wherein R is an alkyl group (i.e., straight or branched hydrocarbon chain radical which is saturated or unsaturated - *i.e*., contains one or more double and/or triple bonds, for example methyl, ethyl, propyl and the like). An example of the alcohol is ethanol. The alcohol is present in the gel-ice in a concentration in the range generally of 0.1% to 25%, and typically 0.5% to 20%. Where the alcohol is a liquid at room temperature (for example ethanol), the % concentration is % v/v. Where the alcohol is a solid at room temperature, the % concentration is % w/v. A component in between the ice-fraction components may be one type or more than one type of salt water, alcohol, or freezing level reducing component (*e.g*., two types of sugars); or a combination thereof (*e.g*., sugar and alcohol). In a related embodiment, the present disclosure provides a drink for human consumption comprising a gel-ice having an alcohol component. For example, the alcohol component may be derived from any source of alcohol (*e.g*., ethanol) such as rum, vodka, whiskey, cognac and the like. In other embodiments, the drink may further comprise a sugar, for example a sugar derived from a fruit juice. Other embodiments provide gel-ice comprising other alcohols, such as methanol, isopropanol or butanol.

The gel-ice described herein has a number of advantageous properties. While not wishing to be bound by theory, Applicants believe the water is trapped in between the ice-fraction components and the small size of the ice-fraction components appears to retard the release of the water. As a result, ice rather than water is the contact surface for whatever item is set on the gel-ice to cool. Consequently, items cool faster and the ice stays colder longer. Faster cooling aids presentation and reduces dehydration of the item. In addition, due in part to the small size of the ice-fraction components, items such as food products (*e.g*., fish or meat) are less likely to receive alterations (such as cuts or oxidation) due to contact with the ice. In an embodiment, a "substance" is cooled by contacting the substance with the gel-ice. As used herein, a substance may be living or non-living, and includes intact organisms or portions thereof. For example, a fish or animal may be deceased when contacted with the gelice. Alternatively, for example, a living organism such as a lobster may be contacted with the gel-ice. The rapid cooling by the gel-ice may permit a living substance to remain viable upon return to its normal temperature following removal of the gel-ice.

Another related advantage of the disclosed gel-ice is that the size of the ice crystals/fractions allows for the creation of ice from a variety of freezing level reducing substances, without changing the chemistry of the underlying substance. For example, when the gel-ice comprises salt, the salt combines in the ice water to make a consistent, evenly distributed salt solution, and does not leave a salt residue in the ice container, or on the raw materials that are being preserved. Instead, the salt remains trapped between the crystals/fractions. While not wishing to be bound by theory, Applicants believe this is due in large part to the size of ice crystal/fraction.

Similarly, when other substances are combined with the processed water, the chemical properties of the underlying substance remain intact within the gel-ice solution. As compared to other ice products, the disclosed gel-ice does not crystallize randomly and does not expand at rates consistent with conventional ice producing techniques (for example, conventional techniques for producing flaked and cubed ice). The gel-ice can have generally consistent crystallization. As such, the chemical properties of the substances (e.g., freezing level reducing agents, salt, alcohols, etc.) used in the ice making process are maintained.

The gel-ice may be used on or off land. Production of the gel-ice on land may be effected by a gel-ice production apparatus that is site specific or an apparatus that is portable. An example of site specific production is gel-ice production at a fixed location meat processing facility. Production of the gel-ice off land (*e.g*., on water, in the air or in space) will typically utilize an apparatus that is portable. Although for shorter trips, the gel-ice may be produced on land and transported to the vehicle to be used off land. A boat or ship is an example of a location for use of gel-ice off land.

The gel-ice and the apparatus disclosed herein have a variety of uses. The gel-ice may be used, for example, for fishery, refrigeration, horticulture, food, beverage, medical and industrial applications. The fisheries lines of business include fishing via vessels or aquaculture (fish farms). Gel-ice can be used to chill fish that are harvested via fishing vessels or aquaculture. After harvesting, gel-ice can be used for refrigerated transportation, cold storage and in market displays of fresh fish. Alternatively, fish may be processed in fish processing facilities (*e.g*., factories). Gel-ice can be used in fish processing facilities.

Gel-ice can be used to keep products cool during refrigerated transportation and cold storage. Due to the surprisingly enhanced cooling capabilities and lasting low temperature of gel-ice, products remain colder longer at the ideal storage temperature which protects the product from spoilage and prevents quality loss. Gel-ice can be used in open containers, in closed containers, or in sealed plastic bags. The apparatus for producing gel-ice can be incorporated into automated packaging systems. Gel-ice can be used in market displays to refrigerate fresh products. Refrigeration with gel-ice can be direct or indirect. In direct cooling, the gel-ice comes in contact with a product and may surround the product completely. Where the product is surrounded completely by gel-ice, the cooled product is also protected from dehydration. In indirect cooling, the gel-ice is used as secondary refrigerant or coolant. In indirect cooling, the gel-ice can be circulated through already available piping as secondary refrigerant and replace environmentally unfriendly refrigerants such as R-22 (FREON^{®}) and other HCFCs.

Gel-ice can be used in horticulture. Fresh fruits and vegetables must be in excellent condition to achieve top quality and maximum shelf life. Water loss following harvesting is one of the main causes of deterioration that reduces the marketability and profitability of fresh fruits and vegetables. Gel-ice protects fresh fruits and vegetables from dehydration. For flowers, temperature is the main factor affecting the storage, shelf and vase life. Rapid cooling is not only the vital first step in the cold chain of cut flowers, but also of importance during the later stages: storage and transportation. Gel-ice can be used to effect rapid cooling.

Gel-ice can be used in the food or beverage industries. In the beverage industry the production, for example, of beer requires temperature reduction at several steps in the process. Gel-ice can be used to lower the temperature of the various vessels used in the preparation or storage of beer. In the food industry the production, for example, of bread requires temperature reduction. The use of high-speed mixers creates an undesired increase of temperatures of dough. Gel-ice can be directly mixed in the dough in order to lower the temperature and therefore control the leavening. Virtually all cheeses need to undergo one or more cooling stages, whether during the starter phase, the whey protein concentration or on the finishing tables. Gel-ice can offer specific benefits during the different cooling stages, *e.g*., by offering substantial savings in time by bringing temperatures down to the desired levels within a much shorter period when compared to cooling systems using solid or flake ice or any other form of chilled water. In addition, gel-ice can be used during transportation of fresh cheese. Several cooling stages are required during the production of ice cream. Typically, ice cubes are put inside the churns during two distinct stages. Gel-ice produced using sugared water can be used in these processes. In the processing of meat from slaughtered animals (*e.g*., livestock such as cows and pigs, and birds such as poultry), cooling is performed at various stages. Without cooling, the high temperature generated by the rotation and friction of the grinder blades would increase the temperature of the ground meat mixture. Gel-ice can cool the mixture quickly and efficiently, therefore reducing the process time. With birds such as poultry, the birds are chilled to prevent bacterial growth and rinsed in chilled water after a salting process. The gel-ice can be used to cool the birds quickly and efficiently, thereby reducing the process time. Gel-ice can also be used to cool and preserve carcasses after slaughter. For example, carcasses of pigs, cattle and the like can be stored in gel-ice. Carcasses can be stored in the gel-ice for extended periods without signs of organoleptic deterioration.

Gel-ice has a variety of medical uses. For example, gel-ice can be used to reduce or prevent swelling or slow bleeding, and to decrease metabolism. Gel-ice can be used to cool an organ (*e.g*., liver, kidney or heart) extracted for transplantation. For example, in some embodiments the gel-ice may comprise a salt solution (e.g., saline, sodium chloride, perfusion solution, HTK Custodiol® solution and the like), and the gel-ice may be used for storage of organs for transplant. Gel-ice can enhance the heat transfer efficiency.

In some uses of the present invention, a liquid can be run through a gel-ice apparatus disclosed herein in order to concentrate, extract or purify. An example is use of the apparatus in the process of preparing instant tea or instant coffee. Concentrates can be prepared using fruit juice (*e.g*., grape juice) or wine. Water can be run through a gel-ice apparatus for purification or desalination. Purification includes waste water purification.

Industrial applications of gel-ice include rapid cooling of laser heads, rapid chilling during pharmaceutical production processes, and petro-chemicals such as natural gas cooling. Examples of other industrial applications include concrete production (absorption of reaction heat) and plastic production (temperature stabilization).

Gel-ice can serve to replace current thermal energy storage (TES) systems for cool storage. TES significantly reduces energy costs by allowing energy-intensive cooling equipment to be predominantly operated during off-peak hours when power rates are lower. Due to the ability of gel-ice to retain a cool temperature, it can be generated during off-peak hours and circulated as a coolant during peak hours.

In addition to the various applications of the gel-ice discussed above, in other embodiments the gel-ice may be used in livestock processing, meat storage and display, poultry processing, poultry storage and display, fishing vessels, fish farms, fish processing, fish storage & display, fruits & vegetables storage and processing, thermal energy storage systems, cold storage, supermarket fresh displays, restaurant storage, bar (alcoholic) mixed drink applications, protective hypothermia, rehabilitation and chronic treatment, organ & tissue preservation (e.g., for organ transplants), injury stabilization & treatment, emergency vehicle unit, injury prevention in collegiate or professional athletic programs, seawater desalination, waste water purification, bread & cheese processing, ice cream production, frozen beverages, wine & beer preparation and storage, veterinary medicine, coffee preparation and storage, horticulture preservation and transportation, 80 FT+ yacht and cruise ship kitchen appliances, hotel food preservation, transport of live shellfish, fish and other sealife, preserved transport of sea life for study, plastic surgery recovery, cadaver preservation (e.g., after natural disasters), forest fire suppression, intermediary food transportation support and preservation, vaccine transportation and storage or cement mixing and cooling. Other applications of the disclosed gel-ice will be readily apparent to one skilled in the art.

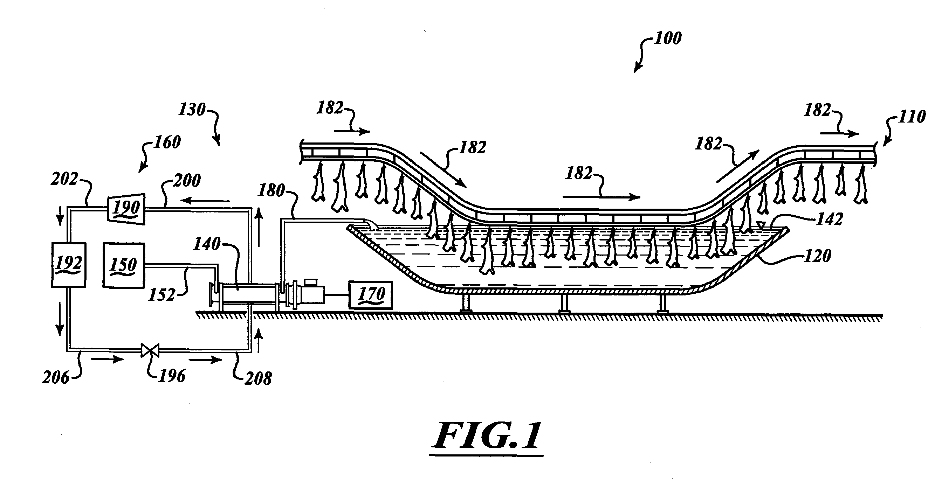

Figure 1 shows a processing system 100 that includes a conveyor system 110, a tank 120, and a gel-ice manufacturing system 130. The gel-ice manufacturing system 130 includes a gel-ice generator apparatus 140, a fluid supply 150, and a cooling system 160 that delivers a coolant to the gel-ice generator apparatus 140. The fluid supply 150 delivers a fluid to the gel-ice generator apparatus 140, which produces gel-ice from the fluid using the coolant. The gel-ice passes through an output line 180 to the tank 120.

The conveyor system 110 moves items, illustrated as hanging swine carcasses, in a direction indicated by arrows 182, to submerge the carcasses in a gel-ice bath 142. The carcasses are successively submerged in the gel-ice bath 142. After the carcasses have been submerged a sufficient amount of time, the carcasses are pulled out of the bath 142 and can be subsequently processed. The gel-ice generation apparatus 140 can continuously or intermittently deliver gel-ice to the tank 120.

The cooling system 160, illustrated as a closed loop system, includes a pressurization device 190, a condenser 192, and a valve 196. A fluid line 200 connects the gel-ice generator apparatus 140 to the pressurization device 190. A fluid line 202 connects the pressurization device 190 to the condenser 192. A fluid line 206 connects the condenser 192 to the valve 196. A fluid line 208 connects the valve 196 to the gel-ice generator apparatus 140. Each of the fluid lines 200, 202, 206, 208 can be a conduit, a pipe, a tube or other component through which a coolant can flow. A coolant can be a refrigerant, such as refrigerant 12 (*e.g*., FREON®), refrigerant 22 (R-22), refrigerant 134a (R-134a), refrigerant 404a (R-404a), ammonia, or other types of refrigerants. Advantageously, the cooling system 160 can recondition the coolant such that the coolant can be repeatedly delivered to the gel-ice generator apparatus 140. If ammonia is utilized, the cooling system 160 may or may not have a compressor. For example, a series of valves can be used to recondition the ammonia.

A line 152 connects the fluid supply 150 to the gel-ice generator apparatus 140. The fluid supply 150 can contain salt water, seawater, sugared water, alcohol, mixtures thereof, or the like, as well as a wide range of different types of freezing level reducing components or additives. To concentrate or purify a liquid, the fluid supply 150 may contain a fruit juice *(e.g.,* grape juice), wine, liquor (*e.g*., vodka, rum, etc.), or the like.

The fluid supply 150 can include one or more pressurization devices (*e.g*., a piston pump, a diaphragm pump, a rotary pump, a screw pump, or the like) to pump the fluid through the line 152. In some embodiments, the fluid supply 150 includes multiple containers, each containing a different fluid. For example, one container can hold salt water or sugared water. Another container can hold another liquid, such as alcohol. The different liquids can be delivered through separate lines to the gel-ice generator apparatus 140. The fluids can be mixed within the gel-ice generator apparatus 140. In other embodiments, liquids are mixed within the fluid supply 150. The mixture is then delivered to the gel-ice generator apparatus 140. The fluid supply 150 can also include, without limitation, filter systems, mixers, sensors, valves, controllers, or the like. In certain embodiments, the fluid supply 150 is a pump that delivers a liquid from an external liquid source, such as the ocean. A filter system can filter the seawater before processing.

A controller 170 is communicatively coupled to the gel-ice generator apparatus 140, as well as other components or systems, such as the cooling system 160 or the fluid supply 150, or both. Different types of wired or wireless connections can be used to provide communication between the controller 170 and the other devices. The controller 170 can adjust processing variables, including, without limitation, operating speeds (*e.g*., a rotational speed of a mixing apparatus), processing temperatures, working pressures, flow rates (*e.g*., gel-ice flow rates, starting fluid flow rates, flowable material flow rates, or the like). The term "flowable material" can refer to one or more fluids, a gel-ice, mixtures thereof, or the like. For example, a flowable material can be a liquid, such as saltwater, sugared water, alcohol, or the like. The controller 170 can be communicatively coupled to and command a drive device to rotate the mixing apparatus of the gel-ice generator apparatus 140 to process such flowable materials to produce gel-ice having ice-fractions with a diameter equal to or less than, for example, about 2.5 microns.

The controller 170 generally includes, without limitation, one or more central processing units, processing devices, microprocessors, digital signal processors (DSP), application-specific integrated circuits (ASIC), readers, and the like. To store information, controllers also include one or more storage elements, such as volatile memory, non-volatile memory, read-only memory (ROM), random access memory (RAM), and the like. Controllers can include displays to display information, such as gel-ice characteristics, processing temperatures, flow rates (*e.g*., volume flow rates), flow velocities, or the like. Example displays include, but are not limited to, LCD screens, monitors, analog displays, digital displays (*e.g*., light emitting diode displays), or other devices suitable for displaying information. The term "information" includes, without limitation, one or more programs, executable code or instructions, routines, relationships (*e.g*., gel-ice flowability versus processing temperatures, flow sensor signals versus volume flow rates, etc.), data, operating instructions, combinations thereof, and the like. For example, information may include one or more temperature settings, flow rate settings, pressure settings, drive device speeds, or the like. Different programs can be used to process different fluids. To produce gel-ice from salt water, the salinity of the salt water is inputted into the controller 170, which determines an appropriate program based upon the inputted information. To process a different fluid, such as sugared water, the controller 170 can select a different program.

The coolant in the gel-ice generator apparatus of Figure 1 absorbs heat as the flowable material is cooled and evaporates. The heated coolant in the line 200 can thus be a high temperature vapor. The high temperature vapor passes through the fluid line 200 to the pressurization device 190. The high temperature vapor is compressed within the pressurization device 190 to produce a superheated vapor, which is outputted to the line 202. The superheated vapor travels through the line 202 to the condenser 192. The condenser 192 cools the superheated vapor to produce a low temperature liquid, which is outputted to the line 206. The low temperature liquid travels through the line 206 to the valve 196. The low temperature liquid passes through the valve 196 (*e.g*., an expansion valve) to produce a low temperature liquid-vapor mixture. The cold liquid-vapor mixture travels through the line 208 and ultimately into the gel-ice generator apparatus 140.

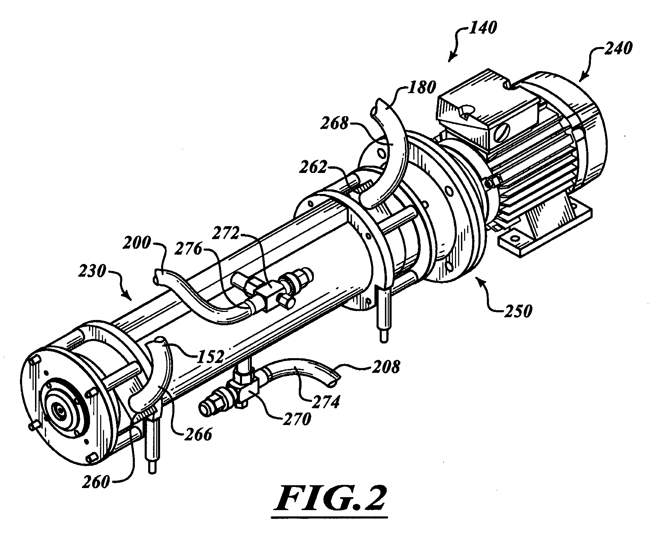

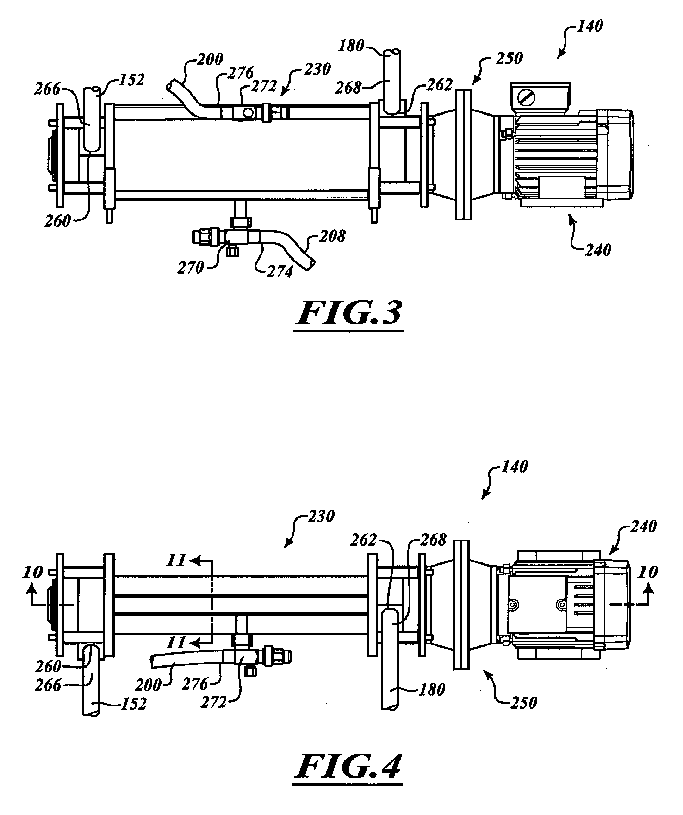

Referring to Figures 2-4, the gel-ice generator apparatus 140 includes a mixing unit 230, a drive device in the form of a drive motor 240, and a coupler 250 connecting the mixing unit 230 to the drive device 240. The mixing unit 230 includes an inlet 260 for receiving a fluid and an outlet 262 for outputting gel-ice. The inlet 260 is coupled to a downstream end 266 of the line 152. The outlet 262 is coupled to an upstream end 268 of the line 180. The mixing unit 230 also includes a coolant inlet 270 and a coolant outlet 272. The coolant inlet 270 is coupled to a downstream end 274 of the line 208. The coolant outlet 272 is coupled to an upstream end 276 of the line 200.

The drive device 240, when energized, rotates internal components of the mixing unit 230. In some embodiments, the drive device 240 is in the form of an electrical motor, such as a DC motor (for example, a brushed DC motor, a brushless DC motor, or the like) capable of achieving relatively high rotational speeds. In certain embodiments, the electric drive device 240 can provide about 0.25 kW to 1.5 kW of power. Such electric motors can be a single-phase motor or a three-phase motor that operates at a frequency of about 50-60 hertz. In other embodiments, a frequency regulator can be used to operate the motor at about 100 hertz. The motors can operate at about 110 volts to about 230 volts. Other types of motors operating at different frequencies/volts can also be utilized.

In some embodiments, the drive device 240 comprises a hydraulically driven motor or generator. For example, the drive device 240 can be in the form of a hydraulic motor that converts hydraulic pressure and flow from a hydraulic system to mechanical energy. The hydraulic motor 240 can be driven at different speeds by utilizing fluids at different pressures, including fluids at high or low working pressures. The hydraulic systems for pressuring the working fluid can include, without limitation, one or more pumps, pressurization devices, and valve systems.

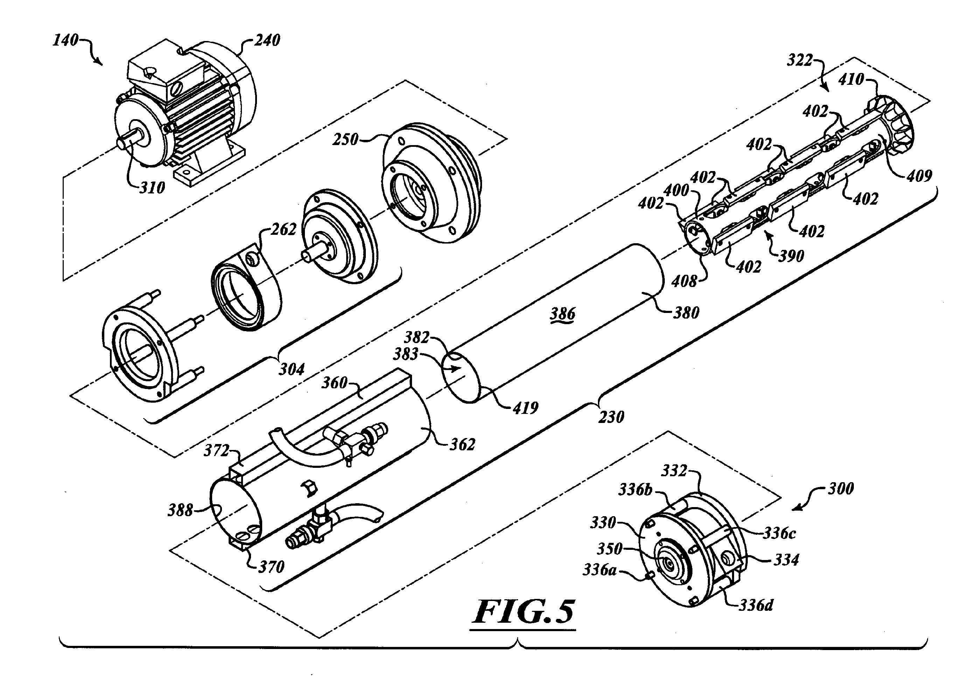

Figure 5 is an exploded isometric view of the gel-ice generator apparatus 140 that generally includes an inlet assembly 300, a dispenser mechanism 304, and the mixing unit 230. The dispenser mechanism 304 is coupled to the coupler 250. A drive shaft 310 of the drive device 240 is coupled to the coupler 250. The coupler 250 transmits mechanical energy to the mixing unit 230.

The inlet assembly 300 includes an end cover 330, a base plate 332, and an inlet element 334 through which a fluid can flow. A plurality of connectors 336a-d couple the end cover 330 to the base plate 332. The inlet element 334 is held firmly between the end cover 330 and the base plate 332. A bearing 350 extends through the end cover 330, the inlet element 334, and the base plate 332.

A cooling jacket 360 for cooling a container formed, at least in part, of an inner tube 380 generally includes an outer tube 362, a coolant inlet manifold 370, and a coolant outlet manifold 372. Coolant flows through the inlet manifold 370, a coolant chamber, and the outlet manifold 372. The coolant in the coolant chamber reduces the temperature of the flowable material within the inner tube 380.

The outer tube 362 is sized to receive and surround the inner tube 380 and can have a generally circular profile, polygonal profile, elliptical profile, or other suitable profile and can be made, in whole or in part, of one or more plastics, foams, metals, composites, or combinations thereof. The outer tube 362 can include at least one layer of a thermal insulating material (*e.g*., a layer of open-cell foam or closed-cell foam) to inhibit heat transfer across the wall of the outer tube 362.

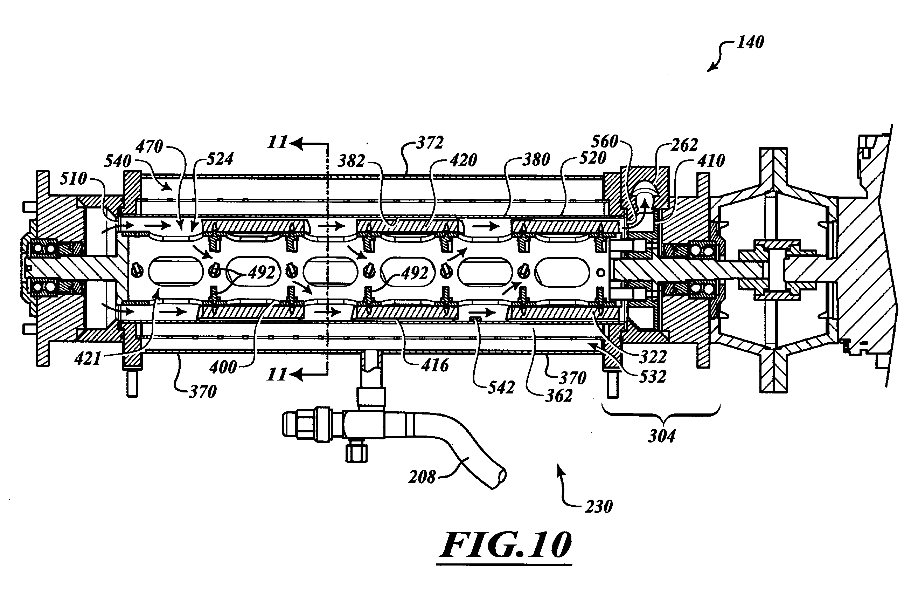

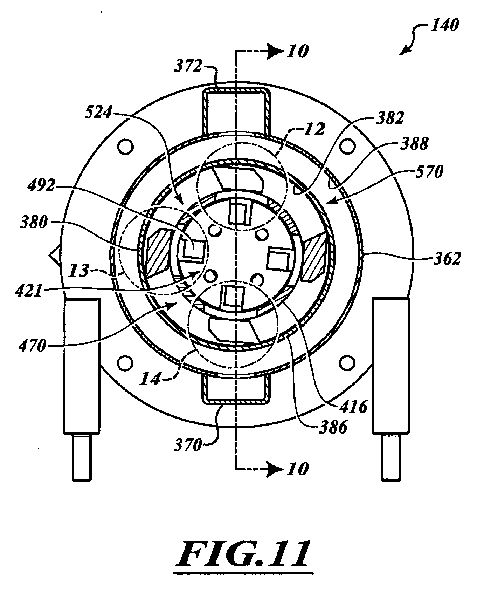

The inner tube 380 of Figure 5 has an inner surface 382 that defines a passage 383 and an outer surface 386. The outer surface 386 faces an inner surface 388 of the outer tube 362 when assembled. The outer surface 386 and the inner surface 388 can define a coolant chamber, as discussed in connection with Figures 10 and 11.

The inner tube 380 can be made of a material selected based on, for example, wear characteristics, mechanical properties, thermal properties (*e.g*., thermal conductivity, thermal expansion/contraction properties, or the like), impact strength, toughness, or the like. The thermal conductivity of the material forming the inner tube 380 can be selected to increase or decrease the rate of heat transfer through a sidewall 419. High heat transfer tubes 380 can be made, in whole or in part, of one or more metals, such as copper, steel, aluminum, combinations thereof, or other high heat transfer materials. In certain embodiments, the inner tube 380 is made, in whole or in part, of an alloy comprising copper for enhanced thermal conductivity. High heat transfer materials allow for more efficient cooling, and thus assist in achieving a higher throughput. High-wear inner tubes 380 can comprise steel or other wear resistant or hardened materials. The surface 382 can be textured, polished, or the like and may be formed by a coating, such as an low-friction coating or anti-stick coating, such as TEFLON®, NANOTECT® from Takenaka Seisakusho Co., Ltd., a high-density carbon nanotube based coating material, or similar material. The surface roughness of the surface 382 can be increased or decreased to increase or decrease the rate of ice-fraction formation. For example, the surface 382 can be a highly polished surface and can be made, in whole or in part, of a material (*e.g*., 316L stainless steel or other food grade metal) suitable for food contact. In non-food applications, the surface 382 can be made of materials not suitable for food contact. The average roughness (Ra) of the surface 382 can be less than about 4 microns. For example, the surface 382 can have an Ra in a range of about 2 µm to about 4 µm. In other embodiments, the surface 382 has an Ra less than about 3 µm. Other surface finishes and roughness are also possible, if needed or desired.

The mixing apparatus 322 of Figure 5 generally includes a rotor shaft assembly 390 and a dispensing wheel 410 coupled to the rotor shaft assembly 390. The rotor shaft assembly 390 includes a hollow rotor shaft 400 and a plurality of deployable elements 402 carried by the rotor shaft 400. An end 408 of the rotor shaft 400 is coupled to the bearing 350. Another end 409 of the rotor shaft 400 is coupled to the dispensing wheel 410. The dispensing wheel 410 includes an array of compartments, each configured to receive and move gel-ice into communication with the outlet 262.

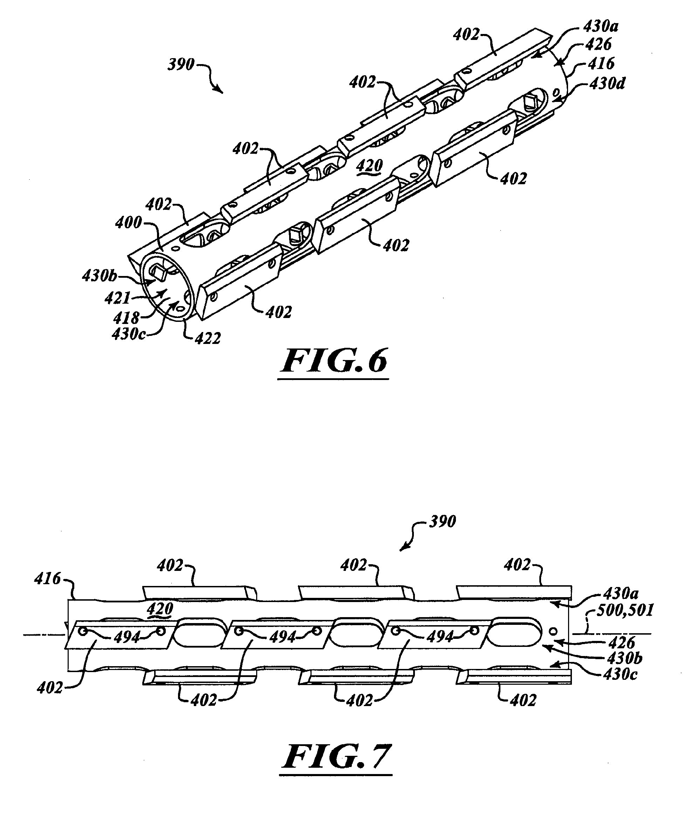

Referring to Figures 6-8, the rotor shaft 400 includes a main body 416, illustrated as a tubular main body, with an inner surface 41.8 and an outer surface 420. The inner surface 41.8 defines a bore 421. The bore 421 extends longitudinally along the length of the main body 416. A plurality of openings 426 extend from the inner surface 418 to the outer surface 420. Each opening 426 defines a flow path through a sidewall 422 of the tubular main body 416. When the mixing apparatus 322 is positioned in the inner tube 380, the openings 426 provide fluid communication between the bore 421 and a gap, which is between the main body 416 and the inner tube 380. As such, flowable material can flow into and out of the bore 421.

Sets 430a-d (collectively "430") of openings 426 are spaced circumferentially apart from one another about the main body 416. Each set 430 includes openings 426 that are spaced apart along the length of the main body 416. In some embodiments, including the illustrated embodiment of Figures 6-8, the main body 416 includes four sets 430 spaced apart from one another about 90° with respect to a longitudinal axis 500 (Figure 7) of the main body 416, and each set 430 includes six generally elliptical openings 426. In other embodiments, the openings 426 have polygonal shapes (*e.g*., square shapes, rectangular shapes, or the like), circular shapes, or any other suitable shapes. The spacing between the openings, number of openings in a set, and opening configurations and dimensions can be selected based on various processing parameters, including desired composition and consistency of the ice-gel and processing times.

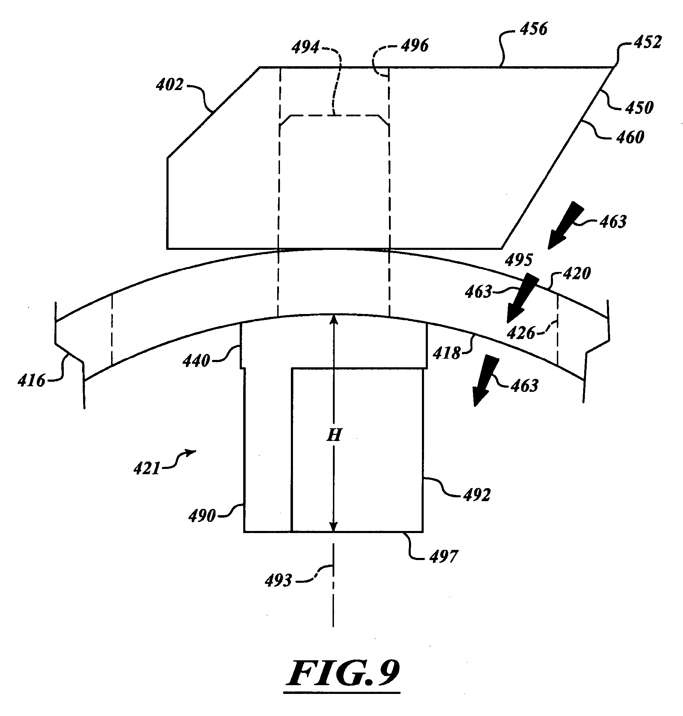

Figure 9 shows one of the elements 402 mounted on the main body 416. As the main body 416 rotates, a connector 440 causes corresponding rotation of the element 402. The connector 440 includes a projection 492 and a shaft 494 (shown in phantom). The projection 492 protrudes from the inner surface 418 into the bore 421. The shaft 494 extends away from the outer surface 420 and extends at least partially through a through-hole 496 of the element 402.

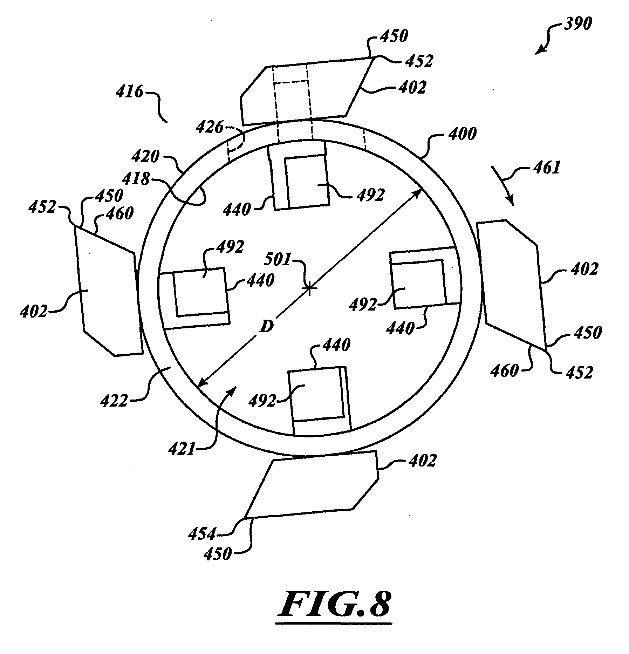

The projection 492 can be in the form of a blade, a fin, a plate, or other element or feature capable of processing (*e.g*., mixing, agitating, separating, or the like) flowable material. In some embodiments, the projections 492 (Figure 8) extend radially into the bore 421 and are arranged and dimensioned to promote mixing of a flowable material in the bore 421. Additionally or alternatively, the projections 492 can be dimensioned to induce a flow (*e.g*., a vortex flow and other type of spiral flow) along the bore 421. Such an embodiment allows the mixing apparatus 322 to function as a vortex tube that can separate components of a flowable material. Heavier components are urged toward the wall 422 while lighter components are urged toward the interior of the bore 421. Additionally or alternatively, the projections 492 can promote turbulence to enhance mixing, produce vortex shedding, or the like. In some embodiments, a ratio of a height H (Figure 9) of at least one of the projections 492 to a diameter D (Figure 8) of the bore 421 is in a range of about 0.1 to about 0.2. By way of example, the diameter D can be about 10 cm and the height H can be about 2 cm for a ratio of about 0.2. As shown in Figure 9, the height H can be the distance from the surface 418 to an end 497 of the projection 492 measured along a longitudinal axis 493 of the projection 492. Such embodiments are well suited to generate at least one of a turbulent flow and a vortex.

Referring again to Figures 6 and 7, each element 402 is connected to the main body 416 by two connectors 440. The elements 402 are generally longitudinally aligned with an axis of rotation 501 of the rotor shaft 400 and can at least partially cover at least some of the openings 462. Four sets of elements 402 are spaced circumferentially apart from one another about the main body 416. Each set includes three elements 402 that are spaced apart along the length of the main body 416.

As shown in Figure 9, the element 402 has a leading portion 450, an outer surface 456, and an inner surface 460 angled with respect to the outer surface 456. As a leading edge 452 of the leading portion 450 passes through a flowable material, the flowable material can flow along the inner surface 460 towards and through the adjacent opening 426 (shown in phantom), as indicated by arrows 463. The elements 402 can be made, in whole or in part, of one or more metals, polymers, ceramics, composites, or other similar materials. Exemplary non-limiting metals include aluminum, steel, titanium, and high strength alloys. For example, the leading edge 452 can be formed of a hardened or high wear material, such as carbide. Such embodiments can withstand repeated contact with the inner tube 380 for a long service life.

Figures 10 and 11 show the gel-ice generator apparatus 140. Generally, a fluid is delivered into a gel-ice formation chamber 470. The fluid passes along the gap 524 between the rotating rotor shaft 400 and the stationary inner tube 380 and also passes through the openings 426. The fluid in the bore 421 can be processed by the projections 492. (To avoid obscuring components, only some of the projections 492 are labeled.) As the flowable material proceeds along the gel-ice formation chamber 470 towards the dispenser mechanism 304, the amount (by weight or volume) of ice-fractions gradually increases. At least proximate to a downstream opening 560, the flowable material can be gel-ice. The gel-ice can flow out of the opening 560 to the wheel 410 (Figure 5). As the dispensing wheel 410 rotates, its compartments are successively brought into fluid communication with the outlet 262. The gel-ice flows through the outlet 262 and along the line 180 to the tank 120 of Figure 1, or other suitable gel-ice storage device. The gel-ice manufacturing process is discussed in detail below.

Referring to Figure 10, fluid is introduced into the gel-ice formation chamber 470 via an opening 510. The opening 510 is defined by the inner surface 382 of the inner tube 380 and the outer surface 420 of the main body 416. If the main body 416 and inner tube 380 are concentric, the opening 510 can have a generally annular shape. Other shaped openings 510 can also be employed, if needed or desired. For example, the opening 510 can have an elliptical shape, polygonal shape, or the like.

The fluid proceeds through the gel-ice formation chamber 470, as indicated by the arrows. The fluid flows towards and past the rotating elements 402 in the gap 524. The fluid also flows through the openings 426 and the bore 421. In this manner, flowable material fills and circulates within the gel-ice formation chamber 470.

The inner tube 380 is chilled and absorbs heat to cool the flowable material. The fluid contacting, or proximate to, the inner surface 382 can become ice-fractions. This is because the fluid reaches a sufficiently low temperature to cause crystallization. The elements 402 can promote the formation of ice-fractions, dislodge ice-fractions from the surface 382, break apart ice-fractions or large ice crystals, promote nucleation of ice-fractions, or otherwise process the flowable material. In certain embodiments, the elements 402 physically contact the surface 382 to form ice-fractions. The ice-fractions move away from the surface 382 and circulate through the gel-ice formation chamber 470. In certain embodiments, the elements 402 slide along a portion of the surface 382 to help form and/or dislodge ice-fractions. The elements 402 can be spaced apart from the surface 382 to mix the flowable material. The elements 402 can thus be spaced apart from the inner surface 382, can contact the inner surface 382, or can be proximate to the inner surface 382, thereby providing processing flexibility.

To cool the inner tube 380, coolant (for example, a cold liquid-vapor mixture) passes through the inlet manifold 370. The liquid-vapor mixture flows through apertures 532 and into a coolant chamber 570, shown in Figure 11. The coolant chamber 570 can serve as an evaporation chamber and is between the outer surface 386 of the inner tube 380 and the inner surface 388 of the outer tube 362. The low temperature liquid-vapor mixture flows along the outer surface 386 and absorbs heat, thereby cooling the inner tube 380, including the inner surface 382.

The coolant circulates to keep the inner tube 380 at a relatively low temperature. The controller 170 (Figure 1) can be in communication with the cooling system 160 to ensure that the inner surface 382 is kept at a desired temperature or within a desired temperature range. In some embodiments, the inner surface 382 can be kept at a sufficiently low temperature to cause rapid formation of ice-fractions. For example, the inner surface 382 can be kept at a temperature of about -20°C to about -10°C. If the starting fluid is salt water, the temperature of the inner surface 382 can be maintained at about -15°C. The temperature of the inner surface 382 can be selected based on the temperature, flow rate, or characteristics (*e.g*., concentration of salt or sugar in the fluid) of the starting fluid fed into the gel-ice formation chamber 470, as well as the desired characteristics of the gel-ice, desired gel-ice generator apparatus throughput, or the like.

As the low temperature liquid-vapor mixture absorbs heat, it begins to evaporate. To remove the evaporated coolant (for example, a heated vapor), the coolant is drawn through openings 540 of the coolant outlet manifold 372. The coolant proceeds through the coolant outlet manifold 372 to the line 200.

Referring to Figures 10 and 11, the rotational speed of the mixing apparatus 322 can be increased or decreased to adjust the properties of the gel-ice. In some processes, the illustrated mixing apparatus 322 rotates counterclockwise (see Figure 11) at a rotational speed equal to or greater than about 300 rotations per minute (RPM). Such embodiments are well suited to produce relatively thick gel-ice. In some embodiments, the mixing apparatus 322 is rotated at a rotational speed within a range of about 300 RPM to about 5,000 RPM. To produce ice-fraction components with diameters equal to or less than about 2.5 microns, the mixing apparatus 322 can be rotated about 300 RPM. The rotational speed can be increased to 5,000 RPM to significantly reduce the size of the ice-fraction components. For example, the mixing apparatus 322 can be rotated at a relatively high rotational speed (for example, 3,000 RPM) to form thin gel-ice, even at high feed rates. If the volume flow rate of the flowable material passing through the formation chamber 470 is increased or decreased, the rotational speed of the mixing apparatus 322 can also be increased or decreased to maintain the consistency of the gel-ice.

In certain embodiments, the gel-ice formation chamber 470 has a length of about 3 m and a diameter of about 30 cm. Such an embodiment provides about 8 kW to about 10 kW of cooling. The volume flow rate of the fluid can be about 250 liters per hour to form thick gel-ice, 350 liters per hour to form thin gel-ice, or 600 liters per hour to form thin, transparent gel-ice. In other embodiments, the gel-ice formation chamber 470 has a length of about 45 cm and a diameter of about 20 cm to provide about 4 kW to about 10 kW of cooling.

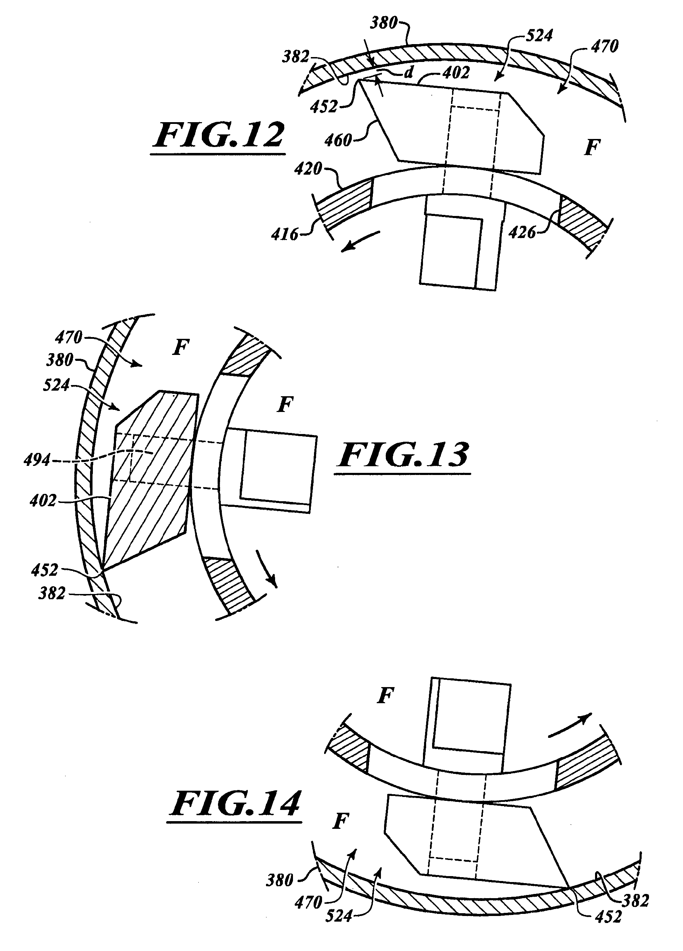

Figure 12-14 show different positions of the elements 402 during processing. The element 402 is free to slide along the shaft 494 and is held captive between the inner tube 380 and the main body 416. The element 402 can be deployed by centrifugal forces, forces produced due to interaction between the flowable material and the element 402, or the like.

Figure 12 shows the element 402 located at the top of the gap 524 (*i.e*., at the top of the gel-ice formation chamber 470). The leading edge 452 is spaced apart from the inner surface 382 by a clearance distance D. In some embodiments, the clearance distance D is equal to or less than about 10 mm, 5 mm, or 2.5 m. The illustrated element 402 rests against the outer surface 420 of the main body 416 and the clearance distance D is about 5 mm.

As shown in Figure 13, when the shaft 494 extends in a generally horizontal direction, the leading edge 452 may be spaced apart from the wall surface 382. As the element 402 approaches the bottom of the gap 524 (as shown in Figure 14), the element 402 slides along the shaft 494 and the leading edge 452 may be brought into contact with the surface 382. Gravity can help keep the edge 452 in contact with the surface 382 as the element 402 slides along the bottom of the inner tube 380. The element 402 may move radially inwards as it is moved to the top of the gap 470. In this manner, the element 402 slidably contacts the shaft 494 and is freely movable with respect to the inner surface 382, especially at low rotational speeds to provide eccentric motion.

At high rotational speeds, the element 402 can be kept proximate to or in contact with the surface 382 due to, for example, centrifugal forces. For example, the leading edge 452 can slide along the inner surface 382 as the mixing apparatus 322 rotates. This ensures that the element 402 slides smoothly along the surface 382 to minimize, limit, or substantially eliminate impact forces that may appreciably damage the surface 382 or element 402, or both.

Although not illustrated, biasing members, actuators, positioners, or the like can be used to actively position the element 402 for processing flexibility.

Referring again to Figure 10, a sensor 542 is capable of sensing various different operating features and parameters present during operation. The sensor 542 can be a flow sensor that measures flow velocities, volume flow rates, or the like. The sensor 542 can send one or more signals indicative of the flow to the controller 170. The controller 170 can control processing based, at least in part, on the signals. The flow sensor 542 can be positioned along the inner surface 382 (illustrated in Figure 10), within one of the openings 510, 560, or any other suitable location for detecting the flow.

In other embodiments, the sensor 542 is incorporated into the wall 419 of the tube 380 to measure the temperature of the flowable material in the gel-ice formation chamber 470 or the coolant in the coolant chamber 570, or both. The sensor 542 can send one or more signals indicative of the measured temperature to the controller 170, which, in turn, can control operation of the cooling system 160 based, at least in part, on the signals. Any number of temperature sensors can be positioned at various locations throughout the gel-ice formation chamber 470 to evaluate different temperatures suitable to monitor processing.

The controller 170 can also monitor processing based on feedback from devices. The controller 170, in some embodiments, determines the characteristics of the material in the gel-ice formation chamber 470 based on, for example, the torque applied by the drive device 240. If a relatively thick gel-ice is formed in the gel-ice formation chamber 470, the drive device 240 may apply a relatively high torque to maintain a high rotational speed of the mixing apparatus 322. If the gel-ice in the gel-ice formation chamber 470 is a thin gel-ice, the torque applied by the motor 240 can be relatively low.

The gel-ice manufacturing system 130 of Figure 1 and its components can be incorporated into a wide range of different types of processing systems. If the gel-ice generator apparatus 140 is used on a vessel (*e.g*., a fishing boat), the gel-ice generator apparatus 140 can process seawater to produce gel-ice used to chill seafood, such as fish, or other creatures harvested from the sea. Such gel-ice generation apparatuses 140 can be portable and transported to different locations in the vessels. In meat processing plants, the gel-ice generator apparatus 140 can be incorporated into existing available plumbing to deliver gel-ice used to process meat from slaughtered animals and can be used with available refrigeration systems and fluid supplies.

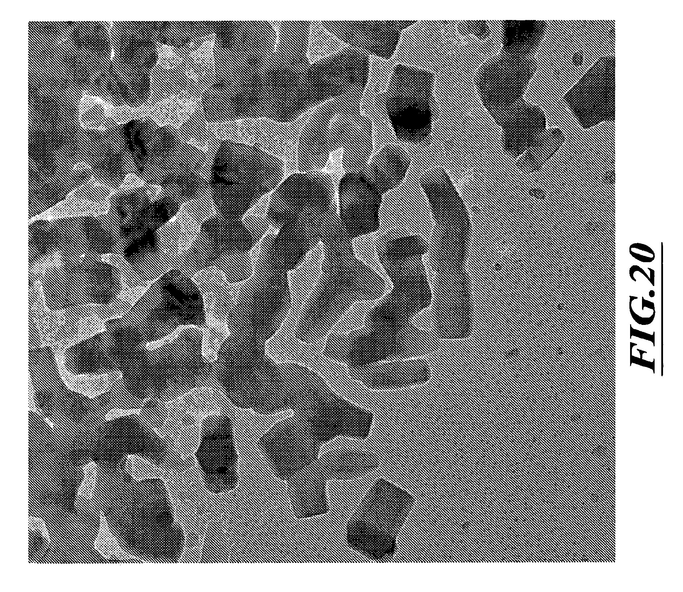

Figure 20 is an isometric view of a pair of modular gel-ice manufacturing systems. A gel-ice manufacturing system 130a includes an outer protective housing 600. The protective housing 600 includes panels and a frame to which the panels can be coupled. Panels of the protective housing of a gel-ice manufacturing system 130b are shown removed.

The gel-ice manufacturing systems 130a, 130b (collectively "130") can be conveniently stacked for transportation or to reduce the footprint of the installed systems. The number of gel-ice manufacturing systems 130 can be increased or decreased to increase or decrease the amount of generated gel-ice. Advantageously, the gel-ice manufacturing systems 130 are portable to allow installation at a wide range of locations.

The gel-ice manufacturing system 130b is similar to the gel-ice manufacturing system 130 of Figure 1 and includes an accumulator 602 and a drier 604. The accumulator 602 can accumulate any liquid outputted from the gel-ice generator apparatus 140 to ensure that gases are delivered to the pressurization device 190 in the form of a compressor. The drier 604 can contain a desiccant for removing water from the working fluid. The drier 604 can be positioned downstream of the gel-ice generator apparatus 140 and upstream of the pressurization device 190. An oil separator 610 can separate out oil from the working fluid (*e.g*., refrigerant) outputted from the gel-ice generator apparatus 140.

A condenser input line 640 delivers a working fluid (*e.g*., chilled water) for the condenser 192. Fluid from the condenser 192 flows out through a condenser output line 642. An input line 650 delivers fluid from a fluid supply to the line 152. An output line 652 receives gel-ice from the line 180.

A control system 670 includes a controller 672, a relay unit 674, an emergency stop unit 676, and a flow control unit 678. The controller 672 includes one or more processors, computing devices, memory (*e.g*., volatile memory, non-volatile memory, read-only memory (ROM), random access memory (RAM)), storage devices, a display 679, and an input device 680. The input device 680 can include, without limitation, one or more buttons, keyboards, input pads, buttons, control modules, or other suitable input devices. The illustrated input device 680 is in the form of an input pad, such as a touch pad, used to program the controller 672. The relay unit 674 can include relays, fuses, circuit breakers, and other electrical components. The emergency stop unit 676 has a button that can be pushed to stop operation of the gel-ice manufacturing systems 130b. The flow control unit 678 can include one or more valves, control modules, and other components suitable for controlling the output of ice-gel.

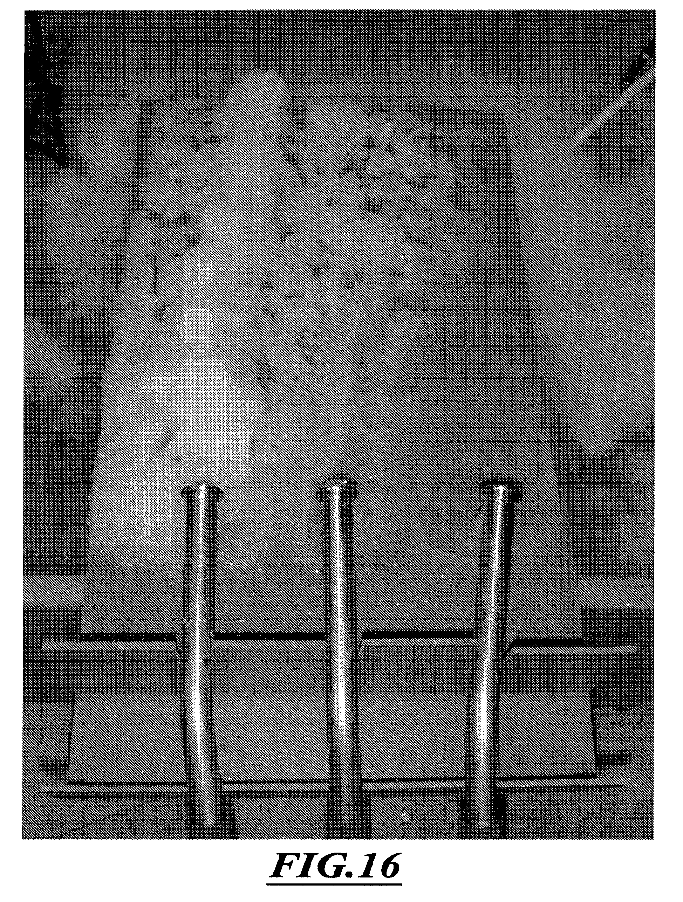

Figure 16 shows different types of gel-ice. The left tube is outputting thick gel-ice with 35% ice-fraction components. The middle tube is outputting medium thick gel-ice with 25% ice-fraction components. The right tube is outputting thin gel-ice with 15% ice-fraction components.

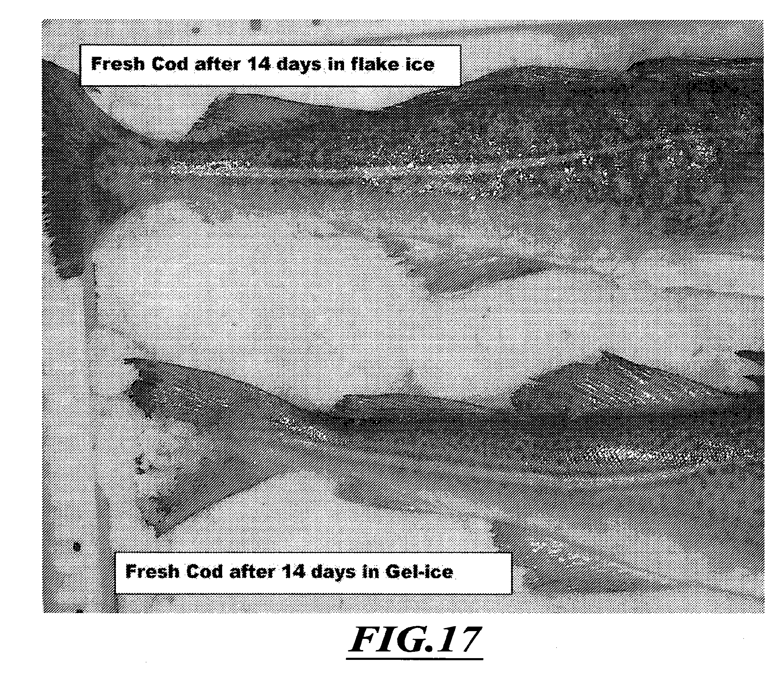

Figure 17 is a picture of two fresh cod after 14 days on different ice.
The top cod was kept in conventional flake ice and the lower cod was kept in gel-ice of the present invention. The cod kept in conventional flake ice shows signs of degradation (e.g., reduction in the number of discrete spots visible), whereas the cod kept in gel-ice does not.

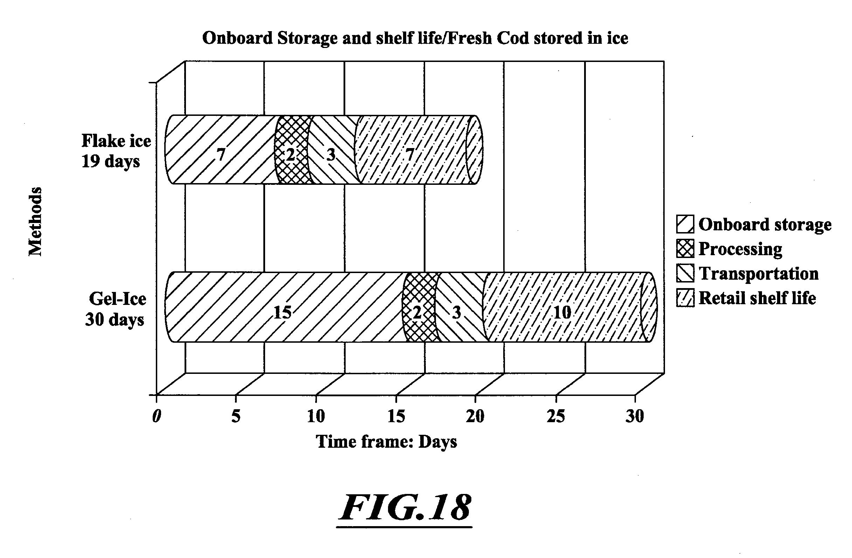

Figure 18 depicts graphs comparing estimates of the onboard storage and retail shelf life of fresh cod stored in conventional flake ice versus gel-ice. The cod stored in gel-ice can increase onboard storage time and can also increase the retail shelf life.

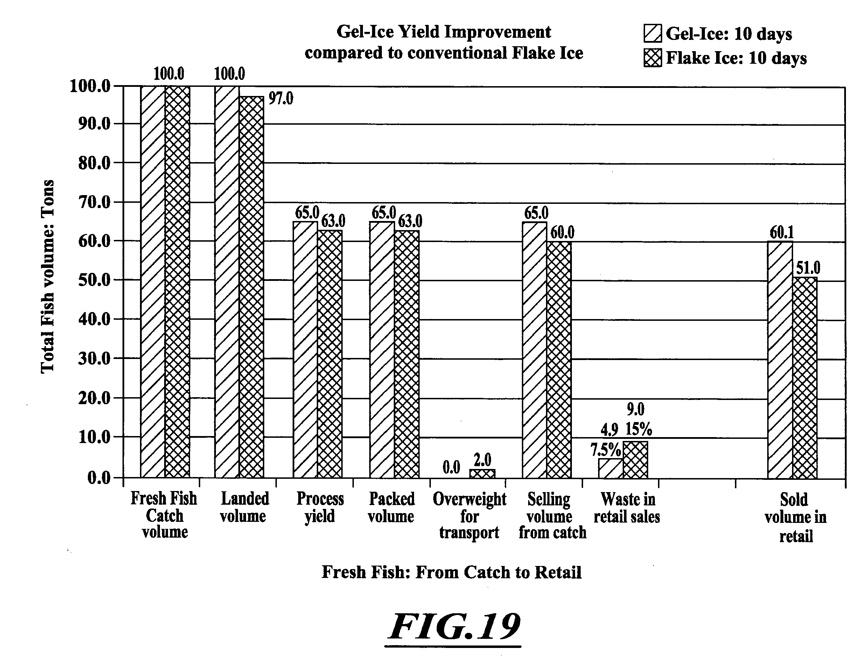

Figure 19 depicts a graph comparing estimates of the yield from catch to retail sale of fresh fish kept in conventional flake ice versus gel-ice of the present invention. As shown, fresh fish stored in gel-ice can increase the yield.

Figure 20 is a scanning transmission electron microscope picture of gel-ice of the present invention. The ice-fraction components of the gel-ice possessed an average diameter of 0.5 to 0.8 microns. Gel-ice can have ice-fraction components with generally uniform crystallization characteristics. The crystallization characteristics can include, without limitation, general shape and size. The ice-fraction components can expand at rates significantly lower than expansion rates of flaked or cubed ice made using conventional ice producing techniques. While not wishing to be bound by theory, Applicants believe that the crystallization characteristics of the gel ice contribute, at least in part, to the freezing level reducing agent retaining its chemical properties in the gel ice.

The following Examples are offered by way of illustration and not by way of limitation.

### EXAMPLES

### EXAMPLE 1

### TEMPERATURE AND QUALITY CONTROL PROTOCOL IN FRESH FISH HANDLING AT SEA OR IN LAND BASED FISH FARMING

Gel-ice of the present invention is produced to achieve an improved storage temperature pre-rigor and to maintain fish temperature under +1°C during the overall process. This is consistent with the goals to: improve yield and shelf life; reduce/prevent weight loss during storage and processing; and minimize/prevent bacterial degradation and oxidation damage.

A gel-ice manufacturing system of the present invention simultaneously produces various gel-ice using only fresh seawater or mixed fresh water with sea-salt at 2.5 - 3% salinity.

For example, the system can produce 4 variable gel-ice at the same time in 4 independent ice-generators, each with an independent ice outlet. An ice machine operator sets ice outlet #1 to produce 15% "ice" (15% w/v of ice-fraction components in the gel-ice), ice outlet #2 for 25% ice, ice outlet #3 for 35% ice and ice outlet #4 for 45%.
a. 15% ice is used in fish reception area to prevent heat buildup prior to bleeding and gutting.
b. 25% ice is used for rapid and immediate chilling after bleeding and gutting, for 20-30 min.
c. 35% ice is used to maintain low temperatures in fish after size grading, prior to introducing the fish to the fish room for storage.
d. 45% ice is used in the fish room to achieve ideal storage temperature for long-term storage of fresh fish prior to the onset of rigor, in insulated fish tubs or refrigerated fish room.
e. Thick ice (40-45%) can also be stored in buffer tanks (1 to 7.5 tons), allowing large volumes of thick ice to be distributed more effectively to the fish room when required.

### EXAMPLE 2

### LAND BASED FISH PROCESSING PROTOCOL

A gel-ice manufacturing system of the present invention with 4 independent ice outlets (as described above) is used.
a. Once fresh fish are delivered from boat for processing, all fish are unloaded from fish tubs into 15% "ice" (15% w/v of ice-fraction components in the gel-ice) in the factory, prior to further grading, de-heading, filleting, etc.
b. 15-20% ice is used to chill products immediately after de-heading, filleting, skinning and portioning. Temperature should not exceed +1°C at any time during this process.
c. Fresh products to market:
   15% ice bath is used to lower core temperature in products to - 5°C prior to packing.
   40% ice (thick ice from tank) is used on fresh products to maintain low temperatures during transportation to market and provide shelf life at ideal storage temperature.
d. Frozen products:
   Same as in a and b. 15% ice bath is used to lower core temperature in products to -1°C prior to freezing (IQF or Plate freezers), resulting in greatly reduced weight loss/improved yield. This will also substantially increase freezer capacity since core temperature of -1°C has been achieved prior to loading fresh products into the freezers. Low product temperature will reduce "steam effect" from products in the IQF resulting in greatly reducing defrosting time of IQF units.

### EXAMPLE 3

### TREATMENT OF COW AND PIG CARCASSES

A gel-ice according to the present disclosure was prepared. The gel ice comprised 2.5% salt and a sodium chlorite solution as an antioxidant.

Two piglets equal in weight and general organoleptic qualities were obtained. Each piglet showed signs of early stage lipid oxidation and bruising. The first piglet was immersed in the gel-ice for 2.5 hours, while the second piglet was hung in an air cooler to simulate current practice. After immersion the first piglet was hung next to the control piglet for 3 days 22 hours.

After the hold period, the gel-ice treated piglet returned to near slaughter quality, while the control piglet had deteriorated significantly and showed signs of serious organoleptic deterioration. In fact the control piglet lost an additional 9% of its body weight over the test period, while the gel-ice treated piglet lost just 0.12% of its body weight over the same period and appeared as if it had just been slaughtered. The signs of bruising and oxidation were minimal compared to the appearance prior to testing, suggesting that gel-ice has the ability to reverse and repair lipid oxidation and cursory damage. The gel-ice treated piglet was still in good condition even after storage for 11 days.

In a related example, a front quarter of beef having a temperature of approximately 98 degrees F, and showing signs of lipid oxidation just about 45 minutes after slaughter was immersed in a gel-ice solution. The gel-ice solution comprised sodium chlorite at less than about 5 ppm. After 6.5 hour in the gel-ice bath, all signs of lipid oxidation and yellowing were gone.

The various embodiments described above can be combined to provide further embodiments. All of the U.S. patents, U.S. patent application publications, U.S. patent applications, foreign patents, foreign patent applications and non-patent publications referred to in this specification and/or listed in the Application Data Sheet are incorporated herein by reference, in their entirety. Aspects of the embodiments can be modified, if necessary to employ concepts of the various patents, applications and publications to provide yet further embodiments.

These and other changes can be made to the embodiments in light of the above-detailed description. In general, in the following claims, the terms used should not be construed to limit the claims to the specific embodiments disclosed in the specification and the claims, but should be construed to include all possible embodiments along with the full scope of equivalents to which such claims are entitled. Accordingly, the claims are not limited by the disclosure.

## Claims

1. A gel-ice generator apparatus, comprising:
a drive motor;
a container having a gel-ice formation chamber through which fluid flows during operation;
a cooling jacket surrounding the container and through which a coolant is capable of flowing to cool contents in the gel-ice formation chamber; and
a mixing apparatus coupled to the drive motor, the mixing apparatus including a rotor shaft in the gel-ice formation chamber and a plurality of elements carried by the rotor shaft, the elements being movable towards an inner surface of the container in response to rotation of the rotor shaft.

2. The gel-ice generator apparatus of claim 1, wherein the container includes an inner tube having an inner surface defining at least a portion of the gel-ice formation chamber, and
wherein the cooling jacket includes an outer tube surrounding the inner tube of the container to define a coolant chamber between the outer tube and the inner tube.

3. The gel-ice generator apparatus of claim 2, wherein the rotor shaft of the mixing apparatus is a hollow rotor shaft positioned in the gel-ice formation chamber and includes a main body and a plurality of openings, the main body having a bore extending longitudinally along the hollow rotor shaft, the plurality of openings extending through the main body for fluid communication between the bore and a gap between the main body and the inner surface of the inner tube of the container, and
wherein the plurality of deployable elements are positioned in the gap.

4. The gel-ice generator apparatus of claim 3, wherein each of the deployable elements has a leading portion configured to cause flowable material in the gap to flow through at least one of the openings and into the bore as the hollow rotor shaft rotates.

5. The gel-ice generator apparatus of claim 1, wherein the deployable elements are freely movable away from and towards the inner surface of the container to promote forming of ice-fractions with diameters less than about 2.5 microns.

6. The gel-ice generator apparatus of claim 3, further comprising:
a connector extending from the main body of the hollow rotor shaft and through a hole in one of the deployable elements.

7. The gel-ice generator apparatus of claim 6, wherein the one deployable element slidably contacts a shaft of the connector.

8. The gel-ice generator apparatus of claim 3, further comprising:
a plurality of projections extending from the main body into the bore.

9. The gel-ice generator apparatus of claim 8, wherein the plurality of projections are arranged and dimensioned to generate at least one of a turbulent flow within the bore and a vortex within the bore.

10. The gel-ice generator apparatus of claim 3, wherein the plurality of openings define sets of the openings that are circumferentially spaced apart from one another, at least one of the sets includes openings that are spaced apart from one another with respect to a longitudinal axis of the main body.

11. A gel-ice manufacturing system, comprising:
the gel-ice generator apparatus of claim 1;
a fluid supply; and
a controller communicatively coupled to the drive motor of the gel-ice generator apparatus, the controller being configured to command the drive motor to rotate the rotor shaft at a rotational speed equal to or greater than about 1,500 rotations per minute as fluid from the fluid supply flows through the gel-ice formation chamber.

12. The gel-ice manufacturing system of claim 11, further comprising:
a cooling system in communication with the controller, the cooling system being configured to deliver a coolant to the cooling jacket to keep at least a portion of the container that contacts the fluid at a temperature in a range of about -20°C to about 0°C in response to signals from the controller; or
a cooling system in communication with the controller, the cooling system configured to deliver a coolant to the gel-ice generator apparatus to keep an interior surface of the container at a temperature in a range of about -20°C to about -10°C in response to signals from the controller.

13. A method of manufacturing gel-ice, comprising:
delivering a flowable material to a gel-ice formation chamber;
rotating a mixing apparatus to dislodge ice-fractions from a surface of the gel-ice formation chamber with a plurality of radially deployable mixing elements and to mix the flowable material in the gel-ice formation chamber; and
delivering gel-ice out of the gel-ice formation chamber.

14. The method of manufacturing of claim 13, wherein rotating the mixing apparatus includes rotating a rotor shaft carrying the radially deployable mixing elements at a rotational speed equal to or greater than about 1,500 rotations per minute.

15. The method of manufacturing of claim 13, further comprising:
flowing at least some of the flowable material along a section of the gel-ice formation chamber between the mixing apparatus and a container to form ice-fractions along an inner surface of the container, the container including the gel-ice formation chamber.
